# EUROPÄISCHE PATENTANMELDUNG

(11) **EP 4 276 551 A1**
(43) Veröffentlichungstag der Anmeldung: **15.11.2023**
(21) Anmeldenummer: 22173350.4
(22) Anmeldetag: 13.05.2022
(51) Int. Cl.: G05B 19/042, G05B 19/05, G05B 23/02

(54) **APPLIKATIONSMODUL FÜR EINE STEUEREINRICHTUNG**

(71) Anmelder: Siemens Aktiengesellschaft, 80333 München (DE)
(72) Erfinder: Kessler, Alexander, 90408 Nürnberg (DE); Soler Garrido, Josep, 41080 Sevilla (ES); Thon, Ingo, 85630 Grasbrunn (DE); Roelofs, Frank, 91207 Lauf (DE)
(74) Vertreter: Siemens Patent Attorneys

(57) **Zusammenfassung**

Applikationsmodul (110, 230, 240, 250) für eine Steuereinrichtung (100, 200),
wobei das Applikationsmodul (110, 230, 240, 250) zur Kommunikation und zum Zusammenwirken mit weiteren Komponenten der Steuereinrichtung (100, 200) im Rahmen einer Steuerung einer Maschine (400, 500) oder Anlage ausgebildet und eingerichtet ist,
wobei das Applikationsmodul (110, 230, 240, 250) zum Erzeugen einer Zusatzfunktionalität für die Steuereinrichtung (100, 200) vermittels Verwendung einer Nutzerapplikation (115) ausgebildet und eingerichtet ist,
wobei das Applikationsmodul (110, 230, 240, 250) zur Ausführung eines Betriebsmodus ausgebildet und eingerichtet ist, wobei in dem Betriebsmodus die Zusatzfunktionalität für die Steuereinrichtung (100, 200) unter Verwendung der Nutzerapplikation (115) erzeugt wird,
dadurch gekennzeichnet, dass das Applikationsmodul (110, 230, 240, 250) zur Ausführung eines Testmodus ausgebildet und eingerichtet ist, wobei der Testmodus zum Testen der Nutzerapplikation (115) ausgebildet und eingerichtet ist.

## Beschreibung

Die vorliegende Erfindung betrifft ein Applikationsmodul für eine Steuereinrichtung, wobei das Applikationsmodul zur Kommunikation und zum Zusammenwirken mit weiteren Komponenten der Steuereinrichtung im Rahmen einer Steuerung einer Maschine oder Anlage ausgebildet und eingerichtet ist, und wobei das Applikationsmodul zum Erzeugen einer Zusatzfunktionalität für die Steuereinrichtung vermittels Verwendung einer Nutzerapplikation ausgebildet und eingerichtet ist.

Derartige Applikationsmodule sind aus dem Stand der Technik bekannt.

So offenbart z.B. das Europäische Patent EP 2 325 708 B1 ein Echtzeit-Laufzeitsystem, welches eine Vielzahl von Funktionsmodulen und ein Verwaltungsmodul umfasst. Die mehreren Funktionsmodule sind so konfiguriert, dass sie sich während eines Übergangszustands zwischen Initialisierung und Vorbetrieb mit einer zugewiesenen Modulidentifikation beim Verwaltungsmodul anmelden und während eines Übergangszustands zwischen Vorbetrieb und Initialisierung abmelden. Mindestens eines der mehreren Funktionsmodule ist dazu eingerichtet, während des Übergangszustands zwischen Vorbetrieb und Prüfbetrieb über das Verwaltungsmodul Kommunikationsverbindungen zu weiteren Funktionsmodulen aufzubauen, während des Übergangszustands zwischen Prüfbetrieb und Vorbetrieb die Kommunikationsverbindungen abzubauen, während des Übergangszustands zwischen Prüfbetrieb und Echtzeitbetrieb an den weiteren Funktionsmodulen anzumelden und während des Übergangszustands zwischen Echtzeitbetrieb und Prüfbetrieb abzumelden.

Es ist ein Nachteil des Standes der Technik, dass Steuerprogramme oder andere Applikationen für Steuereinrichtungen in den jeweiligen Entwicklungssystemen für diese Programme (z.B. einem sogenannten Automatisierungs-Engineeringsystem) entwickelt und ausgetestet werden, und es daher bei deren Ausführung auf einer entsprechenden Steuerungshardware dadurch zu Problemen kommen kann, dass wegen z.B. Spezialitäten bei der verwendeten Steuerungshardware der Ablauf des Programms im Entwicklungssystem anders verläuft, als wenn das Programm auf der Steuerungshardware selbst abläuft.

Daher ist es eine Aufgabe der vorliegenden Erfindung, ein verbessertes Verfahren und eine entsprechende Vorrichtung zur Verfügung zu stellen, die ein verbessertes und/oder vereinfachtes Testen von Software oder Applikationen für Steuerungssysteme ermöglicht.

Diese Aufgabe wird gelöst durch ein Applikationsmodul mit den Merkmalen des Patentanspruch 1.

Ein derartiges Applikationsmodul ist zur Verwendung in einer Steuereinrichtung ausgebildet und eingerichtet, wobei das Applikationsmodul zur Kommunikation und zum Zusammenwirken mit weiteren Komponenten der Steuereinrichtung im Rahmen einer Steuerung einer Maschine oder Anlage ausgebildet und eingerichtet ist.

Das Applikationsmodul ist weiterhin zum Erzeugen einer Zusatzfunktionalität für die Steuereinrichtung vermittels Verwendung einer Nutzerapplikation ausgebildet und eingerichtet. Dabei ist das Applikationsmodul zur Ausführung eines Betriebsmodus ausgebildet und eingerichtet, wobei in dem Betriebsmodus die Zusatzfunktionalität für die Steuereinrichtung unter Verwendung der Nutzerapplikation erzeugt wird.

Weiterhin ist das Applikationsmodul zur Ausführung eines Testmodus ausgebildet und eingerichtet ist, wobei der Testmodus zum Testen der Nutzerapplikation ausgebildet und eingerichtet ist.

Dadurch, dass das Applikationsmodul einen Testmodus gemäß der vorliegenden Beschreibung aufweist, bzw. zur Ausführung eines solchen Testmodus ausgebildet und eingerichtet ist, ist ein verbessertes und/oder vereinfachtes Testen einer Software oder Applikationen für das Applikationsmodul bzw. ein Steuerungssystem mit einem solchen Applikationsmodul möglich.

Ein solcher Testmodus ermöglicht es beispielsweise, dass zum Testen der Nutzerapplikation das Applikationsmodul selbst, und damit die Hardware, auf welchem die Nutzerapplikation letztendlich laufen soll, bereits verwendet wird. So können Probleme und Fehler reduziert oder sogar vermieden werden, die dadurch auftreten können, dass sich der Ablauf der Nutzerapplikation auf einem Entwicklungssystem für solche Nutzerapplikation und auf der Steuereinrichtung bzw. dem Applikationsmodul, unterscheiden können, da eine unterschiedliche Hardwareausstattung beider Systeme zu unterschiedlichen Programmabläufen führen kann.

Ein solcher Testmodus kann beispielsweise derart ausgebildet und eingerichtet sein, dass eine Nutzerapplikation im Applikationsmodul im Rahmen eines solchen Testmodus getestet werden kann oder testbar ist. Dabei kann der Testmodus derart ausgebildet und eingerichtet sein, dass, wenn eine Nutzerapplikation im Rahmen eines solchen Testmodus abläuft, keine Steuerungsbefehle zu einer durch die entsprechende Steuereinrichtung gesteuerten Maschine oder Anlage ausgegeben werden.

Das Applikationsmodul kann beispielsweise als ein HardwareModul ausgebildet und eingerichtet sein. Ein solches Hardwaremodul kann beispielsweise als baulich eigenständiges Modul ausgebildet und eingerichtet sein. Ein solches baulich eigenständiges Hardwaremodul kann beispielsweise ein Gehäuse aufweisen und/oder mechanische Elemente oder Vorrichtungen zur Kopplung mit der Steuereinrichtung bzw. zur mechanischen Integration in die Steuereinrichtung umfassen.

Weiterhin kann das Applikationsmodul kommunikativ mit der Steuereinrichtung und/oder weiteren Komponenten der Steuereinrichtung verbunden oder verbindbar sein. In einer weiteren Ausgestaltung kann das Applikationsmodul kommunikativ lösbar mit der Steuereinrichtung und/oder weiteren Komponenten der Steuereinrichtung verbunden oder verbindbar sein.

Weiterhin kann das Applikationsmodul als ein Software-Modul ausgebildet und eingerichtet sein. In diesem Fall kann beispielsweise eine Steuereinrichtung dieses Software-Modul umfassen und die Steuereinrichtung weiterhin zur Ausführung dieses als Software-Modul ausgestalteten Applikationsmoduls ausgebildet und eingerichtet sein.

Einer vorteilhaften Ausgestaltung ist das Applikationsmodul Teil der Steuereinrichtung. Dabei kann das Applikationsmodul beispielsweise logisch der Steuereinrichtung zugehörig sein. Weiterhin kann das Applikationsmodul mechanisch und/oder kommunikativ mit der Steuereinrichtung gekoppelt sein bzw. mechanisch und/oder kommunikativ in die Steuereinrichtung integriert sein. Das Applikationsmodul kann auch als eine Software-Applikation ausgebildet und eingerichtet sein, wobei die Steuereinrichtung dann das als Softwareapplikation ausgestaltetes Applikationsmodul umfassen kann.

Ein Applikationsmodul kann als ein frei programmierbares Applikationsmodul ausgebildet und eingerichtet sein. Ein frei programmierbares Applikationsmodul ermöglicht es, eine frei programmierbare bzw. unabhängig programmierbare "Anwendung" oder "App" bereitzustellen, die als Teil einer Firmware des Applikationsmoduls ausgeführt wird und/oder im Rahmen einer vom Applikationsmodul bereitgestellten Ablaufumgebung ausgeführt wird.

Ein frei programmierbares Applikationsmodul kann beispielsweise zur Ausführung von Software bzw. Programmen ausgebildet und eingerichtet sein, welche in einer Programmiersprache erstellt und ausgeführt werden, welche nicht von einer oder mehreren weiteren Komponenten und/oder Modulen der Steuereinrichtung bzw. den restlichen Komponenten und/oder Modulen der Steuereinrichtung unterstützt wird. Insbesondere kann ein frei programmierbares Applikationsmodul beispielsweise zur Ausführung von Software bzw. Programmen ausgebildet und eingerichtet sein, welche in einer Programmiersprache erstellt und/oder ausgeführt werden, welche nicht durch den IEC-Standard IEC 61131 oder vergleichbare Standards bezüglich Steuerungseinrichtungen und/oder speicherprogrammierbaren Steuerungen als Programmiersprachen für derartige Einrichtungen festgelegt sind.

In einer vorteilhaften Ausgestaltung ist ein frei programmierbares Applikationsmodul nicht zum Ablauf von Programmen ausgebildet und eingerichtet, die in einer Programmiersprache gemäß IEC 61131, IEC 61499 oder einem vergleichbaren Standard erstellt wurden bzw. sind. Dies sind z.B. die Programmiersprachen: AWL (Anweisungsliste / engl. Instruction List (IL)), KOP (Kontaktplan / engl. Ladder Diagram (LD)), FBS oder FUP (Funktionsbaustein-Spache / engl. Function Block Diagram (FBD)), AS (Ablaufsprache / engl. Sequential Function Chart (SFC)) und ST (Struktuierter Text / engl. Structured Text (ST)).

Ein frei programmierbares Applikationsmodul für eine Steuereinrichtung kann beispielsweise derart ausgebildet und eingerichtet sein, dass es zum Ablauf einer Software-Applikation zusätzlich zu einem in der Steuereinrichtung ablaufenden Steuerprogramms zur Steuerung der Maschine oder Anlage ausgebildet und eingerichtet ist. Ein derartiges frei programmierbares Applikationsmodul ermöglicht die Realisierung einer Funktionalität der Steuereinrichtung zusätzlich zu einer Standard-Steuerungsfunktionalität, die beispielsweise durch ein zentrales Steuerungsmodul für die Steuereinrichtung realisiert wird. Das zentrale Steuerungsmodul kann beispielsweise zum Ablauf des Steuerprogramms zur Steuerung der Maschine oder Anlage ausgebildet und eingerichtet sein. Das neutrale Steuerungsmodul kann beispielsweise auch gemäß dem Standard IEC 61131, IEC 61499 und/oder vergleichbaren Standards ausgebildet und eingerichtet sein oder zu mindestens eine derartige Funktionalität umfassen.

Beispiele für derartige Applikationsmodule können beispielsweise Hard- und/oder Software-Module zur Ausführung von Machine-Learning Applikationen sein. Weitere Beispiele für solche Applikationsmodule sind beispielsweise Hard- und/oder Software-Module zur Realisierung Boole'scher Prozessoren, zur Realisierung bzw. Durchführung von Simulationen bzw. dem Ablauf von Simulationsprogrammen, zur Programmierung bzw. Ausführung von mathematischen Algorithmen, analytischen Verfahren oder Big-Data Analysen, zum Ablauf eigenständiger Programme in einer oder mehrerer vorgegebenen Programmiersprachen (z.B. C, C++, Python, ...) oder Hard- und/oder Softwaremoduls für vergleichbare Anwendungen oder Applikationen.

Die Steuereinrichtung kann z.B. als eine elektronische Einrichtung zum Steuern einer Vorrichtung oder Anlage ausgebildet und eingerichtet sein. Sie kann z.B. als speicherprogrammierbare Steuerung, modulare Speicherprogrammierbare Steuerung, Computer mit einer Steuerungs-Softwareapplikation oder Steuerungs-App, eine sogenannte "Soft-PLC", oder auch nur eine Steuerungs-Softwareapplikation ausgebildet und eingerichtet sein. Weiterhin kann eine Steuereinrichtung auch als eine Computerhardware, ein Computer- und/oder IT-Netzwerk oder eine Cloud mit einer darauf installierten, implementierten und/oder instanziierten Steuerungssoftware ausgebildet und eingerichtet sein. Dabei kann die Steuerungssoftware auch modular aufgebaut sein und aus mehreren Softwaremodulen bestehen.

Eine Steuereinrichtung kann dabei derart modular ausgebildet und eingerichtet sein, dass mehrere Module vorgesehen sein können oder sind, wobei neben einem sogenannten Zentralmodul oder CPU-Modul, das zum Ablauf eines Steuerprogramm z.B. zur Steuerung einer Komponente, Maschine oder Anlage (bzw. eines Teils davon) ausgebildet und eingerichtet ist, ein oder mehrere Erweiterungsmodule vorgesehen sein können. Solche Erweiterungsmodule können beispielsweise als eine Strom-/Spannungsversorgung ausgebildet und eingerichtet sein oder auch zur Ein- und/oder Ausgabe von Signalen von bzw. an eine Maschine oder Anlage, oder weiterhin auch als ein Funktionsmodul zur Übernahme spezieller Aufgaben (z.B. ein Zähler, ein Umrichter, Datenverarbeitung mit künstliche-Intelligenz-Methoden (umfasst z.B. ein Neuronales Netz oder ein anderes ML-Modell) ...) .

Die Steuereinrichtung kann weiterhin auch als ein sogenanntes EDGE-Device ausgebildet und eingerichtet sein, wobei ein solches EDGE Device beispielsweise eine Applikation zur Steuerung von Vorrichtungen oder Anlagen umfassen kann. Beispielsweise kann eine solche Applikation als eine Applikation mit der Funktionalität einer speicherprogrammierbaren Steuerung ausgebildet und eingerichtet sein. Das EDGE Device kann dabei beispielsweise mit einer weiteren Steuereinrichtung einer Vorrichtung oder Anlage verbunden sein oder auch unmittelbar mit einer zu steuernden Vorrichtung oder Anlage. Weiterhin kann das EDGE Device derart ausgebildet und eingerichtet sein, dass es zusätzlich noch mit einem Datennetzwerk oder einer Cloud verbunden ist bzw. zur Verbindung mit einem entsprechenden Datennetzwerk oder einer entsprechenden Cloud ausgebildet und eingerichtet ist.

Die Steuereinrichtung kann beispielsweise auch als eine sogenannte speicherprogrammierbare Steuerung (SPS) ausgebildet und eingerichtet sein. Weiterhin kann die sicherheitsgerichtete Steuerungseinrichtung auch als eine sogenannte modulare speicherprogrammierbare Steuerung (modulare SPS) eingerichtet und ausgestaltet sein.

Bei einer speicherprogrammierbaren Steuerung, kurz SPS, handelt es sich um eine Komponente, die programmiert und eingesetzt wird, um eine Anlage oder Maschine zu regeln bzw. zu steuern. In speicherprogrammierbaren Steuerungen können spezifische Funktionen wie beispielsweise eine Ablaufsteuerung implementiert werden, so dass auf diese Weise sowohl die Eingangs- als auch die Ausgangssignale von Prozessen oder Maschinen gesteuert werden können. Definiert werden grundlegende Eigenschaften einer speicherprogrammierbaren Steuerung beispielsweise im Standard EN 61131, IEC 61131 und/oder EN 61499. Die Speicherprogrammierbare Steuerung kann z.B. gemäß mindestens einem der Standards EN 61131, IEC 61131 und/oder EN 61499 und/oder mindestens einem der Teilstandards der Standards EN 61131, IEC 61131 und/oder EN 61499 ausgebildet und eingerichtet sein.

Die Realisierung eine SPS kann auf verschiedene Art und Weise erfolgen. Das heißt, sie kann als elektronisches Einzelgerät, als Softwareemulation, als PC-Einsteckkarte usw. verwirklicht werden. Häufig finden sich auch modulare Lösungen, im Rahmen derer die SPS aus mehreren Steckmodulen zusammengebaut wird.

Zur Steuerung der Maschine oder Anlage kann die Steuereinrichtung beispielsweise entsprechende Schnittstellen und/oder Module zur Kommunikation mit der Maschine oder Anlage umfassen.

Die Steuereinrichtung kann beispielsweise zur Echtzeitsteuerung der Maschine oder Anlage ausgebildet und eingerichtet sein.

Zur Kommunikation mit weiteren Komponenten der Steuereinrichtung kann das Applikationsmodul beispielsweise eine entsprechende Schnittstelle zum Bedienen einer Kommunikationsverbindung mit den weiteren Komponenten der Steuereinrichtung umfassen. Dabei kann eine derartige Kommunikation beispielsweise über einen entsprechenden internen Bus, einen externen Bus oder auch eine Kombination aus einem internen und externen Bus erfolgen. Dabei können die genannten Busse beispielsweise zumindest unter anderem zur Echtzeitkommunikation zwischen den verschiedenen Komponenten der Steuereinrichtung ausgebildet und eingerichtet sein.

Bei einer als Hardware ausgestalteten modularen Steuereinrichtung mit mehreren Modulen kann eine solche Kommunikation mit weiteren Komponenten der Steuereinrichtung beispielsweise über einen sogenannten Rückwandbus erfolgen. Bei einer innerhalb einer Recheneinrichtung, eines Computers oder eines sogenannten Industrie-PCs realisierte Steuereinrichtung mit mehreren Software-Modulen kann eine derartige Kommunikation beispielsweise über einen entsprechenden internen Bus erfolgen. Dabei kann der interne Bus beispielsweise zumindest unter anderem zur Echtzeitkommunikation zwischen verschiedenen Komponenten der Steuereinrichtung ausgebildet und eingerichtet sein.

Eine Zusatzfunktionalität für eine Steuereinrichtung kann beispielsweise eine Funktionalität für eine solche Steuereinrichtung sein, die nicht durch eine zentrale Steuerungskomponente und/oder anderen Komponenten der Steuereinrichtung Verfügung gestellt wird. Beispielsweise kann eine Zusatzfunktionalität für eine Steuereinrichtung als eine Funktionalität ausgebildet und eingerichtet sein, die nicht durch einen Standard für Steuerungseinrichtungen, beispielsweise den Standard IEC 61131, IEC 61499 oder vergleichbare Standards, vorgegeben ist. Zusatzfunktionalitäten für eine Steuereinrichtung können beispielsweise eine oder mehrere der nachfolgend aufgeführten Funktionalitäten sein oder umfassen: eine Funktionalität zum Ablauf von Software in einer bestimmten Programmiersprache sein, eine Funktionalität zum Implementieren mathematischer Algorithmen, Analysemethoden und/oder Big-Data-Analytik, eine Funktionalität zur Realisierung und/oder Implementierung von Machine-Learning-Methoden, Machine-Learning-Modellen, künstliche-Intelligenz-Verfahren und - Methoden, Neuronalen Netzen oder ähnlichem, eine Funktionalität zur Realisierung von Boole'sehen Verfahren, oder vergleichbare Funktionalitäten.

Eine Nutzerapplikation kann dabei jede Art von Software sein, die zum Ablauf innerhalb des Applikationsmoduls, zum Einrichten und/oder Parametrieren des Applikationsmoduls, zur Verwendung durch das Applikationsmodul und/oder zur Speicherung innerhalb des Applikationsmoduls ausgebildet, eingerichtet und/oder vorgesehen ist. Weiterhin kann eine Nutzerapplikation jede Art von Software sein, die auf dem Applikationsmodul abläuft, unter deren Verwendung das Applikationsmodul eingerichtet und/oder parametriert wird oder wurde, die vom Applikationsmodul verwendet wird oder wurde und/oder die im Applikationsmodul, insbesondere in einer Speichereinrichtung des Applikationsmoduls gespeichert ist. Dabei kann eine Nutzerapplikation beispielsweise ein ablauffähiges Softwareprogramm und/oder Daten oder Parameter zur Verwendung durch das Applikationsmodul und/oder das Nutzerprogramm umfassen.

Dabei werden unter Software beispielsweise Programme sowie die zugehörige Dokumentation und weitere Daten, die zum Betrieb eines Computers notwendig sind, verstanden. Dies ist beispielsweise in der ISO/IEC-Norm 24765 so definiert.

Die Zusatzfunktionalität für die Steuereinrichtung kann dann beispielsweise durch den Ablauf eines entsprechenden Nutzerprogramms im Applikationsmodul, den Ablauf einer bereits im Applikationsmodul implementierten Software und/oder eines entsprechenden Betriebssystems (Firmware) unter Verwendung von entsprechenden Nutzerdaten oder Parametern, oder auch eine Kombination dieser Optionen realisiert werden.

Im Betriebsmodus stellt das Applikationsmodul die Zusatzfunktionalität für die Steuereinrichtung zur Verfügung.

In einer vorteilhaften Ausgestaltung kann dabei vorgesehen sein, dass das Applikationsmodul im Betriebsmodus die Zusatzfunktionalität für die Steuereinrichtung zur Verfügung stellt, während das Applikationsmodul in die Steuereinrichtung eingebunden ist bzw. mit weiteren Komponenten der Steuereinrichtung im Rahmen der Steuerung der Maschine oder Anlage zusammenwirkt.

Weiterhin kann das Applikationsmodul eine Betriebssystem-Software umfassen, die derart ausgebildet und eingerichtet ist, dass das Applikationsmodul sowohl im Betriebsmodus als auch in einem Testmodus betreibbar ist bzw. dass das Applikationsmodul einem Betriebsmodus oder einem Testmodus betrieben wird.

Das Applikationsmodul kann dabei derart ausgebildet und eingerichtet sein, dass beispielsweise nach einem Einschalten und/oder Hochfahren des Applikationsmoduls das Applikationsmodul in den Betriebsmodus geht, wenn nicht entsprechende Parameter, Trigger, Signale, Benutzereingaben oder vergleichbare Daten oder Komponenten vorliegen, die eine alternative Vorgehensweise auslösen. Eine solche alternative Vorgehensweise kann beispielsweise das Starten eines Test-Modus zum Testen einer Nutzerapplikation, eines Update-Modus zum Updaten einer installierten Applikation, eines Betriebssystems oder einer Firmware des Applikationsmoduls oder ein Starten vergleichbarer alternative Modi sein.

Der Testmodus kann beispielsweise derart ausgebildet und eingerichtet sein, dass im Rahmen des Testmodus ausgeführte Aktivitäten des Applikationsmoduls keine Auswirkungen auf eine eventuell durch die Steuereinrichtung und/oder das Applikationsmodul gesteuerte Maschinen oder Anlagen haben. Auf diese Weise kann beispielsweise eine Nutzerapplikation im Applikationsmoduls getestet werden, ohne dass es beispielsweise bei Fehlern in der Nutzerapplikation zu Störungen und/oder Schädigungen bei anderen Komponenten des Automatisierungssystems, in welches das Applikationsmodul eingebunden ist, kommen kann. Insbesondere können auf diese Weise beim Testen der Nutzerapplikation keine Störungen und/oder Schädigungen bei einer Steuereinrichtung, in die das Applikationsmodul eingebunden ist, oder einer entsprechend angeschlossenen und/oder gesteuerten Maschine oder Anlage entstehen.

Der Testmodus ermöglicht es damit Nutzerapplikationen in konfigurierbaren Szenarien unmittelbar auf dem Applikationsmodul, d. h. mit der später auch verwendeten Modul-Hardware, zu testen.

Das Applikationsmodul kann beispielsweise in den Testmodus gehen oder wechseln, wenn entsprechende Parameter, Trigger, Signale, Benutzereingaben oder vergleichbare Daten oder Komponenten vorliegen und vom Applikationsmodul erkannt oder erfasst werden.

Ein solches Erkennen und/oder Erfassen von entsprechenden, einen Testmodus auslösenden Parametern, Triggern, Signalen, Benutzereingaben oder sonstigen Informationen, kann beispielsweise durch spezielle Betriebszustände oder Änderungen von Betriebszuständen ausgelöst werden, wie beispielsweise ein Hochfahren, Initialisieren oder Starten oder Neustarten des Applikationsmoduls. Weiterhin kann der Testmodus auch durch gesonderte Abfragen ausgelöst werden. Solche Abfragen können beispielsweise durch eine Benutzereingabe ausgelöst werden (z.B. eine Taste am Applikationsmodul oder auch eine entsprechende Eingabe über ein am Applikationsmodul angeschlossenes bzw. mit ihm verbundenes Gerät, beispielsweise einen Computer, ein HMI, ein Handy, ein Tablet oder ähnliches). Weiterhin können solche Abfragen auch einmalig oder auch regelmäßig vom Applikationsmodul selbsttätig durchgeführt werden.

Dabei kann das Applikationsmodul weiterhin derart ausgebildet und eingerichtet sein, dass das Applikationsmodul zur Durchführung des Testmodus ausgebildet und eingerichtet ist, auch wenn es nicht mit einer entsprechenden Steuereinrichtung verbunden bzw. gekoppelt ist. Auf diese Weise ist es möglich, eine Nutzerapplikation für das Applikationsmodul zu testen, ohne dass die komplette Steuerungshardware bzw. die komplette Steuereinrichtung, mit der bei einer späteren Anwendung das Applikationsmodul zur Steuerung einer Maschine oder Anlage zusammenwirkt, bereits vorhanden ist.

Weiterhin kann das Applikationsmodul auch derart ausgebildet und eingerichtet sein, dass das Applikationsmodul zur Durchführung des Testmodus ausgebildet und eingerichtet ist, wenn es mit der Steuereinrichtung verbunden bzw. gekoppelt ist.

In einer vorteilhaften Ausgestaltung kann das Applikationsmodul derart ausgebildet sein, dass es zur Durchführung des Testmodus ausgebildet und eingerichtet ist, sowohl wenn es mit der Steuereinrichtung verbunden bzw. gekoppelt ist, als auch wenn es nicht mit der Steuereinrichtung verbunden bzw. gekoppelt ist.

Hierbei wird, wie vorstehend bereits erläutert, unter der Kopplung bzw. dem Verbunden-sein mit der Steuereinrichtung zumindest eine kommunikative Kopplung bzw. Verbindung verstanden.

Unter einem Testen der Nutzerapplikation wird beispielsweise verstanden, dass die Nutzer Applikation auf eine Weise abläuft und/oder implementiert ist, wie sie auch ablaufen wird, wenn die Nutzerapplikation mit weiteren Komponenten der Steuereinrichtung zum Steuern einer Maschine oder Anlage zusammenwirkt.

Insbesondere kann das Testen der Nutzerapplikation derart ausgebildet und eingerichtet sein, dass beim Testen der Nutzerapplikation zwar die Nutzerapplikation auf die gleiche Weise im Applikationsmodul abläuft oder dort implementiert ist, wie später beim Steuern einer Maschine oder Anlage, aber während des Testens keinerlei Steuersignale an die Maschine oder Anlage ausgegeben werden.

Beim Testen der Nutzerapplikation können damit Konfigurationen, Parametrierungen und/oder Ablaufcode der Nutzerapplikation in konfigurierbaren Szenarien getestet werden.

Die vorstehend genannte Aufgabe wird auch gelöst von einem Applikationsmodul für eine Steuereinrichtung, wobei das Applikationsmodul zur Kommunikation und zum Zusammenwirken mit weiteren Komponenten der Steuereinrichtung im Rahmen einer Steuerung einer Maschine oder Anlage ausgebildet und eingerichtet ist, wobei das Applikationsmodul zum Erzeugen einer Zusatzfunktionalität für die Steuereinrichtung vermittels Verwendung einer Nutzerapplikation ausgebildet und eingerichtet ist, und wobei weiterhin das Applikationsmodul derart ausgebildet und eingerichtet ist, dass die Nutzerapplikation auf dem Applikationsmodul testbar ist, auch wenn das Applikationsmodul nicht mit der Steuereinrichtung oder weiteren Komponenten der Steuereinrichtung verbunden ist.

In einer vorteilhaften Ausgestaltung kann das Applikationsmodul derart ausgebildet und eingerichtet sein, dass die Nutzerapplikation auf dem Applikationsmodul testbar ist, auch wenn das Applikationsmodul zumindest kommunikativ nicht mit der Steuereinrichtung verbunden ist.

In einer vorteilhaften Ausgestaltung kann vorgesehen sein, dass ein Automatisierungs-Engineeringsystem zum Einrichten der Steuereinrichtung sowie ein Applikations-Engineeringsystem zum Erstellen der Nutzerapplikation vorgesehen sind,
wobei das Applikationsmodul derart ausgebildet und eingerichtet ist, dass ein Testen der Nutzerapplikation vermittels eines Zusammenwirkens des Applikationsmoduls mit dem Applikations-Engineeringsystem erfolgt oder durchführbar ist.

Dabei kann das Applikationsmodul weiterhin derart ausgebildet und eingerichtet sein, dass ein Testen der Nutzerapplikation vermittels eines unmittelbaren Zusammenwirkens des Applikationsmoduls mit dem Applikation-Engineeringsystem erfolgt oder durchführbar ist.

In einer weiteren vorteilhaften Ausgestaltung kann ein Automatisierungs-Engineeringsystem zum Einrichten der Steuereinrichtung sowie ein Applikations-Engineeringsystem zum Erstellen der Nutzerapplikation vorgesehen sein, wobei das Applikationsmodul derart ausgebildet und eingerichtet ist, dass ein Testen der Nutzerapplikation ohne Einbeziehung der Steuereinrichtung und/oder des Automatisierungs-Engineeringsystems erfolgt oder durchführbar ist.

Diese Ausgestaltung ermöglicht es, eine Nutzerapplikation auf dem Applikationsmodul zu testen, ohne dabei das Automatisierungs-Engineeringsystem involvieren oder nützen zu müssen. Es ist damit auch möglich, die Nutzerapplikation auf dem Applikationsmodul unmittelbar in Verbindung mit dem Applikations-Engineeringsystem, und ohne das Automatisierungs-Engineeringsystem mit einbeziehen zu müssen, zu testen.

Diese Ausgestaltung ermöglicht es beispielsweise, das Applikations-Engineeringsystem, welches auch zum Designen, Entwickeln, Erstellen und/oder Parametrieren der Nutzerapplikation herangezogen wird, auch zum Testen der Nutzerapplikation auf dem Applikationsmodul zu verwenden. Damit wird außer dem speziellen Applikations-Know-how für das Testen der Nutzerapplikation relativ wenig, oder auch keine, Information oder Erfahrung bezüglich weiterer Komponenten der Steuereinrichtung, insbesondere keine Kenntnisse bezüglich eines entsprechenden Automatisierungs-Engineeringsystems, notwendig.

Dies ist insbesondere bei Nutzerapplikationen vorteilhaft, die ein spezielles Know-how oder spezielle Kenntnisse erfordern, wie beispielsweise auf dem Gebiet maschinellen Lernens, der künstlichen Intelligenz, neuronaler Netze, Simulationen, Big-Data-Analyse, Statistik, mathematische Algorithmen, spezielle Programmiersprachen oder vergleichbare Anwendungen. Dies liegt beispielsweise daran, dass in der Regel ein Fachmann für dieses spezielle Know-how nicht unbedingt auch ein entsprechendes Know-how bei dem Umgang mit einem entsprechenden Automatisierungs-Engineeringsystem bzw. dem Erstellen von Steuerprogrammen und/oder beim Einrichten einer Steuereinrichtung hat.

Damit wird auf diese Weise ein vereinfachtes und/oder verbessertes Testen von Software oder Applikationen für Steuerungssysteme ermöglicht.

Dabei wird unter einem Automatisierungs-Engineeringsystem ein System bzw. eine Software verstanden, mit welcher Steuereinrichtungen zum Steuern von Maschinen oder Anlagen programmiert, parametriert und/oder eingerichtet werden. Insbesondere werden beispielsweise mit Automatisierungs-Engineeringsystem entsprechende Steuerprogramme für eine Steuereinrichtung erstellt, entsprechende Kommunikationsverbindungen zur Kommunikation innerhalb der Steuereinrichtung und/oder zur Kommunikation mit entsprechenden Computern, Computernetzwerken oder einer Cloud, HMI-Geräten, anderen Steuereinrichtungen, Edge-Devices, Feldgeräten, Antrieben und/oder Sensoren eingerichtet und auch die Steuereinrichtung selbst eingerichtet und/oder parametriert. Bei einer Steuereinrichtung, welche mehrere Komponenten umfasst, werden beispielsweise mittels eines entsprechenden Automatisierungs-Engineerings-Systems die einzelnen Komponenten eingerichtet und/oder parametriert sowie auch deren Verbindung eingerichtet und parametriert.

Ein Automatisierungs-Engineeringsystem kann beispielsweise als ein Computersystem mit einer geeigneten Software ausgestaltet und eingerichtet sein, das zur Erzeugung von Automatisierung-Engineeringdaten für eine bestimmte Maschine oder Produktionsanlage ausgebildet und eingerichtet ist. Solche Automatisierungs-Engineeringdaten sind beispielsweise Daten, wie sie für die Automatisierung und/oder Steuerung der Produktionsanlage oder Maschine erstellt werden und/oder vorgesehen sind. Dazu gehört beispielsweise, dass vermittels eines solchen Automatisierungs-Engineeringsystems beispielsweise entsprechende Steuerprogramme erstellt werden und die Komponenten der Produktionsanlage oder Maschine und auch der entsprechenden Steuerungen entsprechend parametriert werden. Ein Beispiel für ein solches Engineering-System ist beispielsweise ein Computersystem, auf welchem die am Markt erhältliche Software mit dem Produktnamen "TIA-Portal" installiert ist.

Dabei können Automatisierungs-Engineeringdaten verschiedenste Engineering-Elemente umfassen, beispielsweise ein oder mehrere Steuerprogramme, Variablen, sogenannte "Tags", Programmbausteine, Funktionsbausteine, Datenbausteine, Programmblöcke, sogenannte "Programm Organizational Units", verwendete Datentypen, ID-Informationen zu Komponenten, Konfigurationsdaten, Aufrufinformationen für Programmelemente, Kommentare, Steuerprogramme und/oder vergleichbare Engineering-Elemente.

Ein Applikation-Engineeringsystem kann beispielsweise als ein auf einem Rechner, einem Rechnernetzwerk oder auch in einer Cloud installierte Software ausgebildet und eingerichtet sein, die zum Entwickeln einer Nutzerapplikation gemäß der vorliegenden Beschreibung ausgebildet und eingerichtet ist.

Insbesondere kann ein Applikation-Engineeringsystem zum Erstellen von Nutzerapplikationen auf einem bestimmten technischen Gebiet oder Nutzerapplikationen eines bestimmten Typs ausgebildet und eingerichtet sein. Applikations-Engineeringsysteme können beispielsweise für das Erstellen von Nutzerapplikationen auf dem Gebiet des maschinellen Lernens, der künstlichen Intelligenz, neuronaler Netze, von Simulationen, von Big Data-Analyse, der Analytik, der Statistik, mathematischer Algorithmen, spezieller Programmiersprachen (z.B. C, C++, Python o.ä.) und/oder auf vergleichbaren Gebieten ausgebildet und eingerichtet sein.

Dass ein Testen der Nutzerapplikation vermittels eines Zusammenwirkens bzw. eines unmittelbaren Zusammenwirkens des Applikationsmoduls mit dem Applikations-Engineeringsystem erfolgt oder durchführbar ist, kann beispielsweise derart ausgebildet und eingerichtet sein, dass bei einem derartigen Testen ein entsprechendes Automatisierungs-Engineeringsystem für die Steuereinrichtung nicht involviert ist.

Auf diese Weise können beispielsweise die Entwicklungs-Tools, die beim Entwickeln der Nutzerapplikation herangezogen wurden, oder vom Applikations-Engineeringsystem zur Verfügung gestellt werden, auch beim Testen der Nutzerapplikation verwendet werden, oder zumindest beim Testen der Nutzerapplikation mitwirken.

Unter einem unmittelbaren Zusammenwirken wird hierbei beispielsweise verstanden, dass im Rahmen der Wechselwirkung des Applikations-Engineeringsystems mit dem Applikationsmodul keine weitere logische Einheit involviert ist. Das unmittelbare Zusammenwirken kann beispielsweise auch derart ausgebildet und eingerichtet sein, dass im Rahmen der Wechselwirkung des Applikation-Engineeringsystems mit dem Applikationsmodul keine wesentliche Datenumwandlung oder auch keine Datenumwandlung im Rahmen einer Übertragung von Daten zwischen dem Applikations-Engineeringsystem und dem Applikationsmodul stattfindet.

Dass das Applikationsmodul mit dem Applikations-Engineeringsystem unmittelbar zusammenwirkt bedeutet nicht, dass es eine ununterbrochene Kommunikationsverbindung, eine unmittelbare Kommunikationsverbindung oder überhaupt eine Kommunikationsverbindung zwischen dem Applikations-Engineeringsystem und dem Applikationsmodul geben muss.

Es muss im Rahmen des Testens keine oder keine dauerhafte Kommunikationsverbindung zwischen dem Applikation-Engineeringsystem und dem Applikationsmodul bestehen. Das Testen kann beispielsweise derart ausgebildet und eingerichtet sein, dass beispielsweise eine Datenvorbereitung oder Applikations-Vorbereitung für das Testen vom Applikations-Engineeringsystem ausgeführt wird und diese Daten bzw. diese Nutzerapplikation dann zum Testen auf das Applikationsmodul übertragen wird. Die Übertragung kann beispielsweise über eine Kommunikationsverbindung oder auch eine bewegliche Speichereinrichtung (beispielsweise eine SD-Karte oder ähnliches) oder ähnlichem Mittel erfolgen.

Das Applikation-Engineeringsystem kann auch während des Testens mit dem Applikationsmodul kommunikativ verbunden sein. In diesem Fall kann das Testen der Nutzerapplikation auf dem Applikationsmodul beispielsweise ohne Mitwirkung des Applikation-Engineerings-Systems ablaufen oder auch mit Mitwirkung des Applikation Engineerings-Systems.

Die vorstehend genannte Aufgabe wird auch gelöst durch ein Applikationsmodul für eine Steuereinrichtung, wobei das Applikationsmodul zur Kommunikation und zum Zusammenwirken mit weiteren Komponenten der Steuereinrichtung im Rahmen einer Steuerung einer Maschine oder Anlage ausgebildet und eingerichtet ist, wobei das Applikationsmodul zum Erzeugen einer Zusatzfunktionalität für die Steuereinrichtung vermittels Verwendung einer Nutzerapplikation ausgebildet und eingerichtet ist, wobei ein Automatisierungs-Engineeringsystem zum Einrichten der Steuereinrichtung sowie ein Applikations-Engineeringsystem zum Erstellen der Nutzerapplikation vorgesehen sind, wobei das Applikationsmodul derart ausgebildet und eingerichtet ist, dass ein Testen der Nutzerapplikation vermittels eines Zusammenwirkens des Applikationsmoduls mit dem Applikations-Engineeringsystem erfolgt oder durchführbar ist.

Dabei kann das Applikationsmodul weiterhin derart ausgebildet und eingerichtet sein, dass ein Testen der Nutzerapplikation vermittels eines unmittelbaren Zusammenwirkens des Applikationsmoduls mit dem Applikations-Engineeringsystem erfolgt oder durchführbar ist.

Dabei kann das Zusammenwirken bzw. das unmittelbare Zusammenwirken des Applikationsmoduls mit dem Applikations-Engineeringsystem derart ausgebildet und eingerichtet sein, dass das Testen der Nutzerapplikation ohne Einbeziehung der Steuereinrichtung und/oder des Automatisierungs-Engineeringsystems erfolgt oder durchführbar ist.

Die vorstehend genannte Aufgabe wird auch gelöst durch ein Applikationsmodul für eine Steuereinrichtung,
wobei das Applikationsmodul zur Kommunikation und zum Zusammenwirken mit weiteren Komponenten der Steuereinrichtung im Rahmen einer Steuerung einer Maschine oder Anlage ausgebildet und eingerichtet ist,
wobei das Applikationsmodul zum Erzeugen einer Zusatzfunktionalität für die Steuereinrichtung vermittels Verwendung einer Nutzerapplikation ausgebildet und eingerichtet ist,
wobei ein Automatisierungs-Engineeringsystem zum Einrichten der Steuereinrichtung sowie ein Applikations-Engineeringsystem zum Erstellen der Nutzerapplikation vorgesehen sind,
wobei das Applikationsmodul derart ausgebildet und eingerichtet ist, dass ein Testen der Nutzerapplikation ohne Einbeziehung der Steuereinrichtung und/oder des Automatisierungs-Engineeringsystems erfolgt oder durchführbar ist.

Dabei können das Applikationsmodul, die Steuereinrichtung, die Kommunikation und/oder das Zusammenwirken des Applikationsmoduls mit weiteren Komponenten der Steuereinrichtung, die weiteren Komponenten der Steuereinrichtung, die Steuerung der Maschine oder Anlage, die Zusatzfunktionalität für die Steuereinrichtung, die Nutzerapplikation, dass Automatisierungs-Engineeringsystem, dass Applikations-Engineeringsystem, das Testen der Nutzerapplikation sowie das unmittelbare Zusammenwirken des Applikationsmoduls mit dem Applikations-Engineeringsystem gemäß der vorliegenden Beschreibung ausgebildet und eingerichtet sein.

Ein derartiges Applikationsmodul ermöglicht es beispielsweise, das Applikations-Engineeringsystem, welches auch zum Designen, entwickeln, erstellen und/oder parametrieren der Nutzerapplikation herangezogen wird, auch zum Testen der Nutzerapplikation auf dem Applikationsmodul zu verwenden. Damit ist außer dem speziellen Applikations-Know-how für das Testen der Nutzerapplikation relativ wenig, oder auch keine, Information oder Erfahrung bezüglich weiterer Komponenten der Steuereinrichtung, insbesondere keine Kenntnisse bezüglich eines entsprechenden Automatisierungs-Engineeringsystems, erforderlich.

Damit wird auf diese Weise ein vereinfachtes und/oder verbessertes Testen von Software oder Applikationen für Steuerungssysteme ermöglicht.

Dabei kann das Applikationsmodul zur Ausführung eines Betriebsmodus ausgebildet und eingerichtet sein, wobei in dem Betriebsmodus die Zusatzfunktionalität für die Steuereinrichtung unter Verwendung der Nutzerapplikation erzeugt wird. Das Applikationsmodul kann weiterhin zur Ausführung eines Testmodus ausgebildet und eingerichtet sein, wobei der Testmodus zum Testen der Nutzerapplikation ausgebildet und eingerichtet ist.

Ein solcher Testmodus ermöglicht es beispielsweise, dass bereits zum Testen der Nutzerapplikation das Applikationsmodul, und damit die Hardware, auf welchem die Nutzerapplikation letztendlich laufen soll, verwendet wird bzw. verwendet werden kann. Damit können z.B. bereits Probleme und/oder Fehler erkannt werden, die beispielsweise durch Unterschiede in der Hardware (und/oder Eigenschaften der Hardware) zwischen dem Applikationsmodul und dem System, auf welchem die Nutzerapplikation entwickelt wurde, hervorgerufen werden.

Dadurch, dass das Applikationsmodul einen Testmodus gemäß der vorliegenden Beschreibung aufweist bzw. zur Ausführung eines solchen Testmodus ausgebildet und eingerichtet ist, ist ein verbessertes und/oder vereinfachtes Testen einer Software oder Applikationen für das Applikationsmodul bzw. ein Steuerungssystem mit einem solchen Applikationsmodul möglich.

Dabei können beispielsweise das Applikationsmodul, der Betriebsmodus, die Zusatzfunktionalität, die Steuereinrichtung, die Nutzerapplikation sowie der Testmodus gemäß der vorliegenden Beschreibung ausgebildet und eingerichtet sein.

Ein Applikationsmodul gemäß der vorliegenden Beschreibung kann weiterhin derart ausgebildet und eingerichtet sein, dass das Applikationsmodul eine Steuerungseinrichtungs-Simulationsapplikation zur Simulation einer Steuerungsfunktionalität der Steuerungseinrichtung umfasst.

Diese Ausgestaltung hat den Vorteil, dass über die Simulations-Applikation das Applikationsmodul selbst in die Lage versetzt wird, beispielsweise im Rahmen des Testens einer Nutzerapplikation, Funktionalitäten zur Verfügung zu stellen bzw. zu übernehmen, welche im normalen Arbeitsablauf der Steuereinrichtung von einer oder mehreren anderen Komponenten der Steuereinrichtung zur Verfügung gestellt werden. Dies verbessert und/oder vereinfacht ein Testen einer Nutzerapplikation mit dem Applikationsmodul, da auf diese Weise das Applikationsmodul beim Testen einer Nutzerapplikation weniger abhängig von anderen Komponenten der Steuereinrichtung ist, oder sogar unabhängig von anderen Komponenten der Steuereinrichtung ist.

In einer vorteilhaften Ausgestaltung kann das Applikationsmodul weiterhin zur Simulation einer grundlegenden Steuerungsfunktionalität der Steuereinrichtung oder einer Basis-Steuerungsfunktionalität der Steuereinrichtung ausgebildet und eingerichtet sein.

Dabei kann eine grundlegende Steuerungsfunktionalität der Steuereinrichtung beispielsweise als eine Funktionalität ausgebildet und eingerichtet sein, wie sie z.B. für speicherprogrammierbare Steuerungen beispielsweise in einem oder mehreren der Standards EN 61131, IEC 61131, EN 61499, IEC 61499 definiert sind. Weiterhin kann eine grundlegende Steuerungsfunktionalität oder Basis-Steuerungsfunktionalität beispielsweise diejenigen Funktionalitäten umfassen, welche in einem oder mehreren der Standards EN 61131, IEC 61131, EN 61499, IEC 61499 definiert sind, und welche von einer Steuereinrichtung, einer Speicherprogrammierbaren Steuerung oder einem Zentral- oder CPU-Modul einer modularen speicherprogrammierbaren Steuerung ausgeführt werden oder werden können.

Das Applikationsmodul kann auch weiterhin eine Simulation von einer oder mehreren externen Schnittstellen (z.B. externen Schnittstellen der Steuerungseinrichtung) umfassen, (z.B. eine Ethernetschnittstelle und/oder einen Ethernet-Port für eine externe Kamera, z.B. eine GigE Vision Kamera) oder auch Simulationen von weiteren Komponenten (z.B. weiteren Komponenten der Steuerungseinrichtung oder auch externen Komponenten (z.B. einer Kamerasimulation)) umfassen.

Die Simulation einer Steuerungsfunktionalität der Steuerungseinrichtung kann z.B. eine Simulation einer Firmware-Funktionalität der Steuereinrichtung umfassen.

Weiterhin kann die Simulation einer Steuerungsfunktionalität der Steuerungseinrichtung auch als Steuerungseinrichtungs-Simulationsprogramm ausgebildet und eingerichtet sein.

Die Simulation einer Steuerungsfunktionalität der Steuerungseinrichtung kann beispielsweise z.B. auch als eine Simulation einer grundlegenden Steuerungsfunktionalität der Steuerungseinrichtung ausgebildet und eingerichtet sein.

Weiterhin kann eine grundlegende Steuerungsfunktionalität auch als diejenige Funktionalität ausgebildet und eingerichtet sein, welche von anderen Komponenten der Steuereinrichtung im Rahmen des Ablaufs der Nutzerapplikation dem Applikationsmodul zur Verfügung gestellt werden, werden müssen und/oder können. Eine grundlegende Steuerungsfunktionalität kann also die Funktionalität sein, welche im Rahmen eines bestimmungsgemäßen Ablaufs der Nutzerapplikation im Applikationsmodul dem Applikationsmodul von einer oder mehreren anderen Komponenten der Steuereinrichtung zur Verfügung gestellt werden muss und/oder kann.

Solche anderen Komponenten der Steuereinrichtung können beispielsweise eine Zentraleinheit, bzw. ein Zentral-Modul oder CPU-Modul der Steuereinrichtung sein oder auch beispielsweise ein Ein- und/oder Ausgabemodul, ein Funktionsmodul und/oder ein Schnittstellenmodul (z.B. ein Feldbus-Schnittstellenmodul, ein Ethernet-Schnittstellenmodul, ein OPC UA Schnittstellenmodul oder vergleichbare Schnitstellenmodule).

Nachfolgend wird eine beispielhafte Funktionalität einer Simulations-Applikation zur Simulation einer Steuerungsfunktionalität der Steuerungseinrichtung beschrieben. In diesem Beispiel ist das Applikationsmodul zum Ablauf einer Neuronalen-Netz-Applikation ausgebildet und eingerichtet. Die Nutzerapplikation ist in diesem Beispiel zur Realisierung einer automatischen optischen Inspektion (AOI) unter Verwendung eines neuronalen Netzes ausgebildet und eingerichtet. Dabei umfasst sie den Ablauf der automatischen optischen Inspektion sowie alle notwendigen Informationen über das neuronale Netz. Diese können beispielsweise die Parameter der Knoten des neuronalen Netzes sowie eine Anzahl und/oder Schicht-Anordnung dieser Knoten sein, oder auch ein entsprechender Programmcode (z.B. in der Sprache "Python") zur Realisierung des neuronalen Netzes sein.

Die Simulation der Steuerungsfunktionalität umfasst dabei dann beispielsweise eine, mehrere oder alle der nachfolgend genannten Funktionalitäten:
- die Simulation eines Triggers zum Starten einer Bildauswertung durch das Applikationsmodul mit der AOI-Nutzerapplikation;
- Bereitstellung eines Bildes, wenn ein Bild vom Applikationsmodul bzw. der AOI-Nutzerapplikation angefordert wird;
- Bereitstellung eines zweiten Bildes, wenn dies von dem Applikationsmodul bzw. der AOI Nutzerapplikation angefordert wird;
- Sammeln der Ergebnisse nach einer Bearbeitung der Daten durch das neuronale Netz;
- Übertragung der vorstehend genannten Ergebnisse an ein Zielmedium. Dabei kann das Zielmedium beispielsweise eine Speichereinrichtung im Applikationsmodul, eine lösbare verbindbare Speichereinrichtung im Applikationsmodul (Z.B. Eine

Speicherkarte o.ä.) Oder auch eine externe Recheneinrichtung sein;
- Vergleich der Ergebnisse der Bearbeitung der Daten durch das neuronale Netz mit vorgegebenen Soll- oder Ziel-Ergebnissen;
- Übertragung der Ergebnisse des vorstehend genannten Vergleichs der Ergebnisse mit den Soll- oder Ziel-Ergebnissen an ein Zielmedium. Dabei kann das Zielmedium beispielsweise wiederum eine Speichereinrichtung im Applikationsmodul, eine lösbar verbindbar Speichereinrichtung im Applikationsmodul oder auch eine externe Recheneinrichtung oder ein externes Rechennetzwerk sein.

Die vorstehend genannte Aufgabe wird auch gelöst von einem Applikationsmodul für eine Steuereinrichtung,
wobei das Applikationsmodul zur Kommunikation und zum Zusammenwirken mit weiteren Komponenten der Steuereinrichtung im Rahmen einer Steuerung einer Maschine oder Anlage ausgebildet und eingerichtet ist,
wobei das Applikationsmodul zum Erzeugen einer Zusatzfunktionalität für die Steuereinrichtung vermittels Verwendung einer Nutzerapplikation ausgebildet und eingerichtet ist,
dadurch gekennzeichnet, dass das Applikationsmodul eine Steuerungseinrichtungs-Simulationsapplikation zur Simulation einer Steuerungsfunktionalität der Steuerungseinrichtung umfasst.

Ein derart ausgebildetes Applikationsmodul hat den Vorteil, das über die Simulations-Applikation das Applikationsmodul selbst beispielsweise in die Lage versetzt wird, im Rahmen des Testens einer Nutzerapplikation Funktionalitäten zur Verfügung zu stellen bzw. zu übernehmen, welche im normalen Arbeitsablauf der Steuereinrichtung von anderen Komponenten der Steuereinrichtung zur Verfügung gestellt werden. Dies verbessert und/oder vereinfacht ein Testen einer Nutzerapplikation mit dem Applikationsmodul, da das Applikationsmodul beim Testen einer Nutzerapplikation auf diese Weise weniger abhängig von anderen Komponenten der Steuereinrichtung ist, oder sogar unabhängig von anderen Komponenten der Steuereinrichtung ist.

Dabei kann das Applikationsmodul, die Steuereinrichtung, die Kommunikation und das Zusammenwirken des Applikationsmoduls mit weiteren Komponenten der Steuereinrichtung, die weiteren Komponenten der Steuereinrichtung, die Steuerung der Maschine oder Anlage, die Zusatzfunktionalität für die Steuereinrichtung, die Nutzerapplikation, die Steuerungseinrichtung Simulations-Applikation sowie die Simulation einer Steuerungsfunktionalität der Steuereinrichtung gemäß der vorliegenden Beschreibung ausgebildet und eingerichtet sein.

Weiterhin kann ein Automatisierungs-Engineeringsystem zum Einrichten der Steuereinrichtung sowie ein Applikations-Engineeringsystem zum Erstellen der Nutzerapplikation vorgesehen sein,
wobei das Applikationsmodul derart ausgebildet und eingerichtet ist, dass ein Testen der Nutzerapplikation vermittels eines Zusammenwirkens des Applikationsmoduls mit dem Applikations-Engineeringsystem erfolgt oder durchführbar ist.

Dabei kann das Applikationsmodul weiterhin derart ausgebildet und eingerichtet sein, dass ein Testen der Nutzerapplikation vermittels eines unmittelbaren Zusammenwirkens des Applikationsmoduls mit dem Applikation-Engineeringsystem erfolgt oder durchführbar ist.

Dabei kann das Applikationsmodul, das Automatisierungs-Engineeringsystem, die Steuereinrichtung, das Applikation-Engineeringsystem, die Nutzerapplikation, das Testen der Nutzerapplikation sowie das Zusammenwirken oder das unmittelbare Zusammenwirken des Applikationsmoduls mit dem Applikation-Engineeringsystem gemäß der vorliegenden Beschreibung ausgebildet und eingerichtet sein.

Weiterhin kann das Applikationsmodul zur Ausführung eines Betriebsmodus ausgebildet und eingerichtet sein, wobei in dem Betriebsmodus die Zusatzfunktionalität für die Steuereinrichtung unter Verwendung der Nutzerapplikation erzeugt wird, und wobei weiterhin das Applikationsmodul zur Ausführung eines Testmodus ausgebildet und eingerichtet ist, wobei der Testmodus zum Testen der Nutzerapplikation ausgebildet und eingerichtet ist.

Dabei kann das Applikationsmodul, der Betriebsmodus, die Zusatzfunktionalität für die Steuereinrichtung, die Nutzerapplikation, der Testmodus sowie das Testen der Nutzerapplikation gemäß der vorliegenden Beschreibung ausgebildet und eingerichtet sein.

In einer vorteilhaften Ausgestaltung ist eine Test-Kennung vorgesehen, wobei das Applikationsmodul weiterhin zum Abfragen und/oder Erkennen der Test-Kennung sowie zum Ausführen des Test-Modus nach einer Erkennung der Test-Kennung ausgebildet und eingerichtet ist. Weiterhin oder alternativ kann das Applikationsmodul auch zum Testen der Nutzerapplikation nach einer Erkennung der Test-Kennung ausgebildet und eingerichtet ist.

Durch das Vorhandensein einer solchen Test-Kennung wird es möglich, nach Bedarf ein Testen einer Nutzerapplikation mit dem Applikationsmodul zu initiieren. Dies verbessert und/oder vereinfacht ein Testen der Nutzerapplikation weiterhin.

Das Einrichten und/oder Speichern einer solchen Test-Kennung kann beispielsweise von einem Nutzer vorgenommen werden oder auch halbautomatisch oder automatisch beispielsweise von einem Applikations-Engineeringsystem zum Erstellen der Nutzerapplikation.

Die Test-Kennung kann dabei jede geeignete beispielsweise digitale und/oder elektronisch speicherbare Größe oder jedes digitale Datum sein, welches in einer Speichereinrichtung speicherbar sein kann. Beispielsweise kann die Test-Kennung in einer Speichereinrichtung des Applikationsmoduls, zum Beispiel auch einer lösbar mit dem Applikationsmodul verbindbaren Speichereinrichtung (z.B. einer SD-Karte o.ä.) gespeichert oder speicherbar sein. Weiterhin kann die Test-Kennung auch eine elektromechanische oder mechanische Kennung sein, beispielsweise das Drücken eines Tasters, das Betätigen einer Schalteinrichtung oder eine vergleichbare mechanische oder elektromechanische Kennung.

Das Abfragen der Testkennung kann beispielsweise das Abfragen einer entsprechenden Variablen oder eines entsprechenden Speicherplatzes in einer Speichereinrichtung umfassen oder auch das Abfragen beispielsweise der Stellung oder eines Zustands einer elektromechanischen oder mechanischen Kennung. Das Erkennen der Test-Kennung umfasst die Kenntnis des Applikationsmoduls, welcher gespeicherte Wert oder welcher Zustand einer elektromechanischen oder mechanischen Kennung ein Testen der Nutzerapplikation bzw. ein Ausführen eines entsprechenden Test-Modus auslöst oder zur Folge hat.

Dabei kann ein Abfragen der Test-Kennung durch das Applikationsmodul zu einem vorgegebenen Zeitpunkt, mehreren vorgegebenen Zeitpunkten (z.B. regelmäßig) oder auch durch eine entsprechende Benutzereingabe erfolgen. Beispielsweise kann ein Abfragen der Testkennung beim Booten oder Hochfahren des Applikationsmoduls und/oder durch ein Test-Triggersignal (z.B. über eine externe Kommunikationsschnittstelle, einen Test-Knopf, einen Reset-Knopf o. ä.) ausgelöst werden.

Dass ein Ausführen des Test-Modus nach einer Erkennung der Test-Kennung erfolgt, bedeutet, dass nach einer Erkennung der Test-Kennung der Testmodus gestartet wird oder, falls dieser bereits gestartet ist, der Testmodus beibehalten wird. Dass ein Testen der Nutzerapplikation nach einer Erkennung der Test-Kennung durchgeführt wird, bedeutet, dass das Testen der Nutzerapplikation nach einer Erkennung der Test-Kennung durchgeführt wird, oder, dass ein bereits laufender Test der Nutzerapplikation weitergeführt wird.

Weiterhin kann vorgesehen sein, dass das Applikationsmodul eine Test-Speichereinrichtung umfasst oder mit einer Test-Speichereinrichtung verbunden ist, und dass die Test-Speichereinrichtung ohne Einbeziehung der Steuereinrichtung und/oder eines Automatisierungs-Engineeringsystems gemäß der vorliegenden Beschreibung beschreibbar ist.

Dass die Test-Speichereinrichtung ohne Einbeziehung der Steuereinrichtung und/oder eines Automatisierungs-Engineeringsystems beschreibbar ist hat den Vorteil, dass es möglich ist, die Test-Speichereinrichtung zu beschreiben, ohne die Steuereinrichtung und/oder das Automatisierungs-Engineerings-Systems zu benötigen. Das ermöglicht zum Beispiel einen Betrieb des Applikationsmoduls, beispielsweise zum Testen einer Nutzerapplikation, ohne die Steuereinrichtung und/oder das Automatisierungs-Engineeringsystem zu involvierten. Dies ermöglicht ein verbessertes und/oder vereinfachtes Testen einer Nutzerapplikation mit einem derart ausgebildet und eingerichteten Applikationsmodul.

Dabei kann das Applikationsmodul, die Steuereinrichtung sowie das Automatisierungs-Engineeringsystem gemäß der vorliegenden Beschreibung ausgebildet und eingerichtet sein.

Die Test-Speichereinrichtung und das Applikationsmodul kann weiterhin derart ausgebildet und eingerichtet sein, dass die Test-Speichereinrichtung vom Applikationsmodul auslesbar ist, wenn sie mit dem Applikationsmodul verbunden ist oder das Applikationsmodul die Test-Speichereinrichtung umfasst.

Dass die Test-Speichereinrichtung ohne Einbeziehung der Steuereinrichtung und/oder eines Automatisierungs-Engineeringsystems gemäß der vorliegenden Beschreibung beschreibbar ist oder beschrieben wird, kann derart ausgebildet und eingerichtet sein, dass die Test-Speichereinrichtung von einer elektronischen Einrichtung beschreibbar ist oder beschrieben wird, wenn die Test-Speichereinrichtung kommunikativ mit der elektronischen Einrichtung verbunden ist und ohne dass die Steuereinrichtung und/oder ein Automatisierungs-Engineeringsystems gemäß der vorliegenden Beschreibung beim Beschreiben mit einbezogen werden muss oder involviert ist. Dabei kann die kommunikative Verbindung zwischen Test-Speichereinrichtung und der elektronischen Einrichtung dauerhaft bestehen oder auch nur temporär bestehen.

Beispielsweise kann die Test-Speichereinrichtung so ausgebildet, eingerichtet und angebracht sein, dass sie von einem Applikations-Engineeringsystem gemäß der vorliegenden Beschreibung beschreibbar ist und/oder beschrieben wird, wenn sie mit diesem Applikations-Engineeringsystem kommunikativ verbunden ist und ohne dass die Steuereinrichtung oder ein Automatisierungs-Engineeringsystem gemäß der vorliegenden Beschreibung dabei einbezogen werden muss oder involviert ist. Dabei kann die kommunikative Verbindung zwischen Test-Speichereinrichtung und dem Applikations-Engineeringsystem dauerhaft bestehen oder auch nur temporär bestehen.

Die Test-Speichereinrichtung kann z.B. fest mit dem Applikationsmodul verbunden oder in es integriert sein oder lösbar mit dem Applikationsmodul verbunden sein. Dabei kann die Test-Speichereinrichtung beispielsweise kommunikativ, mechanisch und/oder elektrisch mit dem Applikationsmodul verbunden sein. Eine kommunikative Verbindung zwischen Test-Speichereinrichtung und Applikationsmodul kann z.B. als drahtlose Kommunikationsverbindung (z.B. über Mobilfunk, WLAN, Bluetooth, NFC oder vergleichbare Kommunikationsverbindungen) oder auch als drahtgebundene Kommunikationsverbindung ausgebildet und eingerichtet sein.

Die Test-Speichereinrichtung kann z.B. als ein RAM-Speicher (RAM: Random Access Memory), ein EPROM-Speicher oder ein vergleichbarer beschreibbarer elektronischer Speicher ausgebildet und eingerichtet sein. Sie kann z.B. als fest in das Applikationsmodul eingebauter Speicher, oder auch als ein lösbar mit dem Applikationsmodul verbindbarer Speicher ausgebildet sein. Ein solcher lösbar mit dem Applikationsmodul verbindbarer Speicher kann z.B. als eine SD-Karte, ein USB-Stick oder eine vergleichbare Speichereinrichtung ausgebildet und eingerichtet sein. Weiterhin kann die Test-Speichereinrichtung als ein Computer, ein externes Datenlaufwerk, ein externer Datenserver, ein NFS (Network File System), eine Speichereinheit in einer Cloud oder eine ähnliche Speichereinrichtung ausgebildet und eingerichtet sein.

Weiterhin kann die Test-Speichereinrichtung zusätzlich auch durch die Steuereinrichtung und/oder ein Automatisierungs-Engineeringsystem gemäß der vorliegenden Beschreibung beschreibbar sein oder von solchen Einrichtungen auslesbar sein.

Das Applikationsmodul kann dabei derart ausgebildet und eingerichtet sein, dass die Test-Speichereinrichtung lösbar mit dem Applikationsmodul verbunden ist.

Dabei kann die Test-Speichereinrichtung insbesondere kommunikativ lösbar mit dem Applikationsmodul verbunden sein. In diesem Fall kann die Kommunikationsverbindung zwischen Test-Speichereinrichtung und Applikationsmodul nach Bedarf gelöst bzw. unterbrochen werden oder auch wiederhergestellt oder auch hergestellt werden. Eine kommunikativ lösbar mit dem Applikationsmodul verbundene oder verbindbare Test-Speichereinrichtung kann beispielsweise als eine Speicherkarte, eine SD-Karte, ein USB-Stick oder vergleichbare Speichereinrichtung ausgebildet und eingerichtet sein. Weiterhin kann eine kommunikativ lösbar mit dem Applikationsmodul verbundene oder verbindbare Test-Speichereinrichtung als ein externes Datenlaufwerk, ein externer Datenserver, ein NFS (Network File System), eine Speichereinheit in einer Cloud oder eine ähnliche Speichereinrichtung ausgebildet und eingerichtet sein.

Zudem kann die Test-Speichereinrichtung auch mechanisch oder/und elektrisch mit dem Applikationsmodul lösbar verbunden sein. Dabei kann wiederum die mechanische und/oder elektrische Verbindung unterbrochen bzw. gelöst werden oder auch hergestellt bzw. wiederhergestellt werden. Eine derartige mechanisch und/oder elektrisch mit dem Applikationsmodul lösbar verbundene Test-Speichereinrichtung kann beispielsweise als eine Speicherkarte, eine SD-Karte, ein USB-Stick oder eine vergleichbare Speichereinrichtung ausgebildet und eingerichtet sein.

Dabei kann das Applikationsmodul wiederum gemäß der vorliegenden Beschreibung ausgebildet und eingerichtet sein.

Eine derartige Ausgestaltung des Applikationsmoduls hat den Vorteil, dass durch eine derartige flexible Ankopplung der Test-Speichereinrichtung eine vereinfachte Kommunikation mit dem Applikationsmodul beispielsweise zum Testen einer Nutzerapplikation möglich wird. Dies verbessert und/oder vereinfacht ein Testen einer Nutzerapplikation mit einem solchen Applikationsmodul.

Das Applikationsmodul kann weiterhin derart ausgebildet und eingerichtet sein, dass die Test-Speichereinrichtung über eine externe Kommunikationsschnittstelle des Applikationsmoduls beschreibbar ist oder beschrieben wird.

Dabei kann die externe Kommunikationsschnittstelle des Applikationsmoduls beispielsweise als eine drahtgebundene Schnittstelle oder auch eine drahtlos-Schnittstelle ausgebildet und eingerichtet sein.

Bei einer drahtgebundenen Schnittstelle kann beispielsweise ein Steckverbinder am Applikationsmodul vorgesehen sein zur Verbindung mit einem entsprechenden Stecker-Gegenstück einer zugehörigen Kommunikationsleitung. Das Applikationsmodul kann zur Kommunikation über die externe Kommunikationsschnittstelle einen entsprechenden Protokoll-Stack umfassen. Eine solche drahtgebundene Schnittstelle kann beispielsweise als eine Ethernet-Schnittstelle, eine Feldbus-Schnittstelle oder auch jede andere drahtgebundene Kommunikationsschnittstelle ausgebildet und eingerichtet sein.

Weiterhin kann das Applikationsmodul auch eine drahtlos-Schnittstelle umfassen. Eine solche drahtlos Schnittstelle kann beispielsweise als eine WLAN-, Bluetooth-, RFID, Near Field Communication (NFC)-, Mobilfunk- oder jede andere Drahtlos-Schnittstelle ausgebildet und eingerichtet sein. Dazu kann das Applikationsmodul gegebenenfalls eine entsprechende Sende- und/oder Empfangseinrichtung und/oder eine entsprechende Antenne umfassen. Weiterhin kann das Applikationsmodul auch einen entsprechenden Protokoll-Stack zur Kommunikation über die Drahtlos-Schnittstelle umfassen.

Zur Kommunikation über die Kommunikationsschnittstelle, bzw. zum Beschreiben der Test-Speichereinrichtung, kann das Applikationsmodul beispielsweise eine entsprechende Netz-Adresse aufweisen. Weiterhin kann auch die Test-Speichereinrichtung selbst eine bestimmte Netzwerk-Adresse oder auch Netzwerk-Kennung oder Netzwerk-ID umfassen.

Dabei kann das Applikationsmodul beispielsweise derart ausgebildet und eingerichtet sein, dass es bei einem externen Gerät bestimmte Daten anfordert, die dann über die Kommunikationsschnittstelle an das Applikationsmodul übertragen werden und dann in der Test-Speichereinrichtung gespeichert werden.

Weiterhin kann das Applikationsmodul auch derart ausgebildet und eingerichtet sein, dass von einem externen Gerät über die Kommunikationsschnittstelle des Applikationsmoduls Daten an das Applikationsmodul übertragen und dann in der Test-Speichereinrichtung gespeichert werden. Dabei kann beispielsweise vorgesehen sein, dass die übertragenen Daten unter der Kontrolle des externen Geräts in der Test-Speichereinrichtung gespeichert werden. Es kann beispielsweise auch vorgesehen sein, dass die übertragenen Daten vom externen Gerät gesendet und an das Applikationsmodul übergeben werden und dann unter der Kontrolle des Applikationsmoduls in der Test-Speichereinrichtung gespeichert werden.

Es kann weiterhin vorgesehen sein, dass auf der Test-Speichereinrichtung Test-Daten zum Testen der Nutzerapplikation gespeichert sind.

In einer Weiterbildung dazu kann vorgesehen sein, dass die Test-Daten weiterhin Test-Eingangsdaten zur Verwendung durch das Applikationsmodul und/oder Ziel-Ergebnisdaten, die ein vorgegebenes Ergebnis der Verarbeitung der Test-Eingangsdaten durch das Applikationsmodul darstellen. Zudem vorteilhaft kann vorgesehen sein, dass die Test-Daten weiterhin Test-Eingangsdaten zur Verwendung durch die Nutzerapplikation im Applikationsmodul umfassen, und/oder Ziel-Ergebnisdaten, die ein vorgegebenes Ergebnis der Verarbeitung der Test-Eingangsdaten durch die Nutzerapplikation im Applikationsmodul darstellen, umfassen.

Dabei können die Test-Daten beispielsweise als Software oder Software-Applikation ausgebildet und eingerichtet sein oder solche Software oder eine solche Software-Applikation umfassen. Diese Software kann beispielsweise als Ausführungscode ausgebildet und eingerichtet sein, beispielsweise als interpretierbarer Code (Z.B. In der Programmiersprache "Python") oder auch als übersetzter oder kompilierter Code (z.B. In den Programmiersprachen C, Mendix, o.ä.). Solche Software oder Software-Applikationen können beispielsweise ein Programm zum Zurverfügungstellen einer bestimmten Funktionalität, ein Simulationsprogramm, ein mittels maschinellen Lernens trainiertes Modell (ein sogenanntes ML-Modell) o. ä. sein oder umfassen.

Weiterhin können die Testdaten Test-Konfigurationen umfassen, wobei derartige Test-Konfigurationen beispielsweise Informationen darüber umfassen können, welcher Test ausgeführt werden kann oder soll, und wie ein solcher Test ausgeführt werden soll bzw. ablaufen soll.

Die Testdaten können auch eine Test-Kennung gemäß der vorliegenden Beschreibung umfassen. Dabei kann weiterhin bereits die Anwesenheit von Test-Daten in der Test-Speichereinrichtung eine Test-Kennung gemäß der vorliegenden Beschreibung darstellen.

Test-Daten können auch weiterhin Daten sein oder umfassen, die zum Testen einer Nutzerapplikation herangezogen werden. Dabei können die Testdaten beispielsweise als Test-Eingangsdaten derart ausgebildet und eingerichtet sein, dass die Nutzerapplikation unter Verwendung der Testdaten abläuft. Es kann weiterhin vorgesehen sein, dass weiterhin Test-Ergebnisdaten vorliegen, welche ein geplantes Ergebnis des Ablaufs zugeordneter Test-Eingangsdaten mit der Nutzerapplikation darstellen. So können die Test-Daten beispielsweise derartige Test-Eingangsdaten und zugeordnete Test-Ergebnisdaten umfassen oder als solche Daten ausgebildet sein.

Du können beispielsweise bei einer als trainiertes neuronales Netz ausgebildet Nutzerapplikation, welche zur Verarbeitung von Bild-Informationen ausgebildet und eingerichtet ist, Test-Eingangsdaten verschiedene Bilder sein, wobei zugehörige Test-Ergebnisdaten dann den jeweiligen Testbildern zugeordnete geplante Ergebnisse der Verarbeitung der jeweiligen Bilder mit dem neuronalen Netz darstellen. Auf diese Weise könnte Applikationsmodul dann beispielsweise Daten zur Verfügung gestellt werden, mit welchem die ordnungsgemäße Funktionalität des auf dem Applikationsmodul implementierten neuronalen Netzes überprüft werden kann. Diese Überprüfung kann beispielsweise dann besonders sinnvoll oder notwendig sein, wenn auf dem Applikationsmodul Hardwareelemente installiert sind, welche auf einem Entwicklungssystem für das neuronale Netz nicht implementiert waren. Solche Hardware können beispielsweise entsprechende Hardware-Beschleuniger zum verbesserten Verarbeiten von Neuronalen Netzen sein.

Mithilfe von Test-Eingangsdaten und zugeordneten Test-Ergebnisdaten lässt sich dann beispielsweise überprüfen, ob eine entsprechende Nutzerapplikation auch auf der Hardware des Applikationsmoduls ordnungsgemäß abläuft.

Weiterhin können die Test-Daten auch als eine Information bezüglich einer externen Speichereinrichtung, einer externen Datenverarbeitungseinrichtung und/oder extern gespeicherten Daten ausgebildet und eingerichtet sein, oder derartige Informationen umfassen. Dabei können solche Informationen bezüglich einer externen Speichereinrichtung, einer externen Datenverarbeitungseinrichtung und/oder extern gespeicherten Daten beispielsweise als Hyperlinks, Netzwerkadressen, Dateinamen, ID-Informationen oder Ähnliches ausgebildet und eingerichtet sein.

Solche extern gespeicherten Daten können beispielsweise wiederum als Test-Daten gemäß der vorliegenden Beschreibung ausgebildet und eingerichtet sein.

Auf diese Weise kann das Applikationsmodul dazu ertüchtigt werden, entsprechende Test-Daten gemäß der vorliegenden Beschreibung von externen Speichereinrichtungen oder Datenverarbeitungseinrichtungen, wie z.B. einem Computer, einem externen Datenspeicher, einem NFS, einer Cloud oder ähnlichem zu beziehen oder geliefert zu bekommen.

Dies vereinfacht das Testen einer entsprechenden Nutzerapplikation weiter, da entsprechende Test-Daten beispielsweise erst bei der Durchführung eines Tests für eine Nutzerapplikation an das Applikationsmodul übertragen werden müssen und so beispielsweise Speicherplatz für ein Vorhalten solcher Test-Daten im Applikationsmodul reduziert oder gespart werden kann.

Weiterhin kann auch vorgesehen sein, dass die Test-Speichereinrichtung die Nutzerapplikation und/oder Applikations-Konfigurationsdaten zum Einrichten des Applikationsmoduls und/oder der Nutzerapplikation umfasst.

Applikations-Konfigurationsdaten können beispielsweise Daten sein, mit welchen das Applikationsmodul zu einem bestimmungsgemäßen Ablauf eines als Softwareapplikation oder Ablaufcode ausgebildeten Nutzerapplikation eingerichtet wird. Weiterhin können derartige Applikation-Konfigurationsdaten beispielsweise Daten über an das Applikationsmodul bzw. die Steuereinrichtung angeschlossene Hardwarekomponenten oder von der Steuereinrichtung umfasste Hardwarekomponenten umfassen. Mithin können Applikation-Konfigurationsdaten auch Kommunikations-Parameter oder Kommunikations-Einstellungen zur Kommunikation des Applikationsmoduls mit anderen Hardwareeinrichtungen und/oder anderen Komponenten der Steuereinrichtung umfassen.

Applikations-Konfigurationsdaten können auch Daten zum Einrichten der Nutzerapplikation oder zum Anpassen der Nutzerapplikation beispielsweise an spezielle Vorgaben des Applikationsmoduls und/oder der Steuereinrichtung bzw. andere Komponenten der Steuereinrichtung umfassen.

Applikations-Konfigurationsdaten können weiterhin auch Daten zum Vorbereiten von bestimmten Test-Eingangsdaten und/oder Test-Ergebnisdaten für das Applikationsmodul und/oder eine bestimmte Nutzerapplikation sein.

Weiterhin kann die Test-Speichereinrichtung die Test-Kennung umfassen.

Dabei kann die Testkennung beispielsweise gemäß der vorliegenden Beschreibung ausgebildet und eingerichtet sein.

In einer vorteilhaften Ausgestaltung kann weiterhin vorgesehen sein, dass die Test-Speichereinrichtung eine ID-Information bezüglich einer externen Speichereinrichtung umfasst, wobei das Applikationsmodul zum Erkennen von Daten auf der externen Speichereinrichtung und/oder zum Anfordern und/oder Laden von Daten von der externen Speichereinrichtung ausgebildet und eingerichtet ist. Insbesondere kann dabei das Applikationsmodul zum Erkennen, Anfordern und/oder Laden von Test-Daten zum Testen der Nutzerapplikation, von Applikations-Konfigurationsdaten zum Einrichten des Applikationsmoduls, Applikations-Konfigurationsdaten zum Einrichten der Nutzerapplikation und/oder der Test-Kennung gemäß der vorliegenden Beschreibung auf bzw. von der externen Speichereinrichtung ausgebildet und eingerichtet sein.

Diese Ausgestaltung hat den Vorteil, dass bei Bedarf, beispielsweise im Rahmen des Testens einer Nutzerapplikation, Daten zur Durchführung bzw. zum Unterstützen eines Tests einer Nutzerapplikation unmittelbar von einer externen Speichereinrichtung an das Applikationsmodul übertragen werden können. Auf diese Weise können beispielsweise vereinfacht Test-Daten gemäß der vorliegenden Beschreibung zum Applikationsmodul transferiert werden. Diese Weise kann beispielsweise Speicherplatz im Applikationsmodul eingespart werden, oder es können auf diese Weise auch jeweils aktualisierte Test-Daten für die Verwendung im Applikationsmodul, beispielsweise im Rahmen des Testens einer Nutzerapplikation, verwendet werden.

Die ID-Information bezüglich der externen Speichereinrichtung kann beispielsweise ein Namen, eine Kennung, eine Netzwerkadresse, ein Hyperlink oder eine vergleichbare Information sein, mit welcher beispielsweise eine Speichereinrichtung oder Datenverarbeitungseinrichtung innerhalb eines Computernetzwerks oder eines Kommunikations-Netzwerks erkannt werden können bzw. erkennbar sind.

Das Erkennen von Daten auf der externen Speichereinrichtung kann beispielsweise vermittels eines entsprechenden Dateinamens, einer Dateikennung, einer Daten-Beschreibung und/oder vermittels vergleichbarer Informationen sein.

Zum Anfordern und/oder Laden kann das Applikationsmodul beispielsweise eine in der Art eines Clients ausgebildete Kommunikationskomponente umfassen, die beispielsweise bei einer als Server ausgebildeten externen Speichereinrichtung bestimmte Daten anfordern kann. Weiterhin kann das Applikationsmodul auch zur Teilnahme an einem sogenannten "Publish-Subscribe"-Kommunikationsschema, beispielsweise zum Abonnieren bestimmter Daten oder Informationen, im Rahmen eines derartigen oder vergleichbaren Mechanismus ausgebildet und eingerichtet sein.

Das Applikationsmodul kann weiterhin auch derart ausgebildet und eingerichtet sein, dass es einer externen Speichereinrichtung Informationen zur Verfügung stellt, welche es der externen Speichereinrichtung erlauben, Daten auf Applikationsmodul bzw. in der Test-Speichereinrichtung zu speichern.

Die externer Speichereinrichtung kann beispielsweise als eine Datenverarbeitungseinrichtung ein Computer, ein Netzwerkspeicher, ein sogenanntes NFS, ein externes Laufwerk, eine externe Festplatte, eine SSD, oder eine vergleichbare Speichereinrichtung ausgebildet und eingerichtet sein.

Die externer Speichereinrichtung kann beispielsweise über ein Datennetzwerk oder eine Kommunikationsverbindung mittelbar oder unmittelbar mit der Steuereinrichtung und/oder dem Applikationsmodul verbunden sein oder verbindbar sein. Dabei kann die externer Speichereinrichtung beispielsweise über eine entsprechende Drahtlos-Kommunikation oder drahtgebundene Kommunikation mit dem Applikationsmodul und/oder der Steuereinrichtung verbunden sein.

Die vorstehend genannte Aufgabe wird auch gelöst durch ein Verfahren zum Testen einer Nutzerapplikation mit einem Applikationsmodul gemäß der vorliegenden Beschreibung für eine Steuereinrichtung,
wobei das Verfahren die nachfolgenden Verfahrensschritte umfasst:
Laden von Test-Eingangsdaten zum Testen der Nutzerapplikation,
Laden von Ziel-Ergebnisdaten, die ein geplantes Ergebnis der Verarbeitung der Test-Daten durch die Nutzerapplikation darstellen,
Testen der der Nutzerapplikation unter Verwendung der Test-Eingangsdaten und der Ziel-Ergebnisdaten,
wobei das Applikationsmodul gemäß der vorliegenden Beschreibung ausgebildet und eingerichtet ist und beim Testen der Nutzerapplikation im Test-Modus befindlich ist.

Weiterhin oder alternativ kann das Applikationsmodul gemäß der vorliegenden Beschreibung ausgebildet und eingerichtet sein und weiterhin und das Laden der Test-Eingangsdaten und/oder das Laden der Ziel-Ergebnisdaten und/oder das Testen der Nutzerapplikation ohne Einbeziehung der Steuereinrichtung und/oder des Automatisierungs-Engineeringsystems erfolgen.

In einer weiteren Alternative kann das Applikationsmodul gemäß der vorliegenden Beschreibung ausgebildet und eingerichtet sein, wobei das Applikationsmodul eine Steuerungseinrichtungs-Simulationsapplikation zur Simulation einer Steuerungsfunktionalität der Steuerungseinrichtung umfasst, und wobei das Testen der Nutzerapplikation unter Mitwirkung der Steuerungseinrichtungs-Simulationsapplikation erfolgt.

Dabei an das Testen der Nutzerapplikation, die Nutzerapplikation, das Applikationsmodul, die Test-Eingangsdaten, die Test-Ergebnisdaten, der Testmodus, die Steuereinrichtung, dass Automatisierungs-Engineering-System, die Steuereinrichtungs-Simulationsapplikation und/oder die Steuerungsfunktionalität gemäß der vorliegenden Beschreibung ausgebildet und eingerichtet sein.

Dabei kann zum Laden von Test-Eingangsdaten und/oder Ziel-Ergebnisdaten ein Laden der Test-Eingangsdaten in das Applikationsmodul und/oder in eine Test-Speichereinrichtung des Applikationsmodul gemäß der vorliegenden Beschreibung vorgesehen sein.

Das Laden von Test-Eingangsdaten und/oder Ziel-Ergebnisdaten kann beispielsweise derart ausgebildet und eingerichtet sein, dass eine lösbar mit dem Applikationsmodul verbindbare Speichereinrichtung vorgesehen ist, beispielsweise eine Speicherkarte oder SD Karte, und die Test-Eingangsdaten und/oder die Ziel-Ergebnisdaten und einem ersten Computersystem oder einer externen Datenverarbeitungseinrichtung auf der lösbar mit dem Applikationsmodul verbindbaren Speichereinrichtung gespeichert werden. Beim Speichern dieser Daten auf dieser Speichereinrichtung kann die Speichereinrichtung beispielsweise nicht mit dem Applikationsmodul verbunden sein, sondern nur mit der externen Datenverarbeitungseinrichtung. Dabei kann die externe Datenverarbeitungseinrichtung beispielsweise ein Applikation-Engineeringsystem gemäß der vorliegenden Beschreibung umfassen und/oder das Speichern der Test-Eingangsdaten und/oder Ziel-Ergebnisdaten durch ein solches Applikation-Engineeringsystem erfolgen.

Als ein weiterer möglicher Schritt zum Laden der Test-Eingangsdaten bzw. Ziel-Ergebnisdaten kann dann die lösbar mit dem Applikationsmodul verbindbare Speichereinrichtung mit den darauf gespeicherten Daten kommunikativ bzw. mechanisch und kommunikativ mit dem Applikationsmodul verbunden werden, so dass beispielsweise ein Betriebssystem des Applikationsmoduls und/oder die Nutzerapplikation dann Zugriff auf die in der Speichereinrichtung gespeicherten Daten hat.

Das Laden der Test-Eingangsdaten und/oder Ziel-Ergebnisdaten kann beispielsweise auch derart erfolgen, dass diese Daten über eine Kommunikationsverbindung von einer externen Speichereinrichtung oder einer externen Datenverarbeitungseinrichtung oder einer vergleichbaren Einrichtung in einer Speichereinrichtung des Applikationsmoduls, beispielsweise eine Test-Speichereinrichtung gemäß der vorliegenden Beschreibung, gespeichert wird.

Das Laden Test-Eingangsdaten und/oder Ziel-Ergebnisdaten kann beispielsweise auch im Rahmen des Testens unmittelbar von einer externen Datenverarbeitungseinrichtung und/oder Speichereinrichtung gemäß der vorliegenden Beschreibung erfolgen.

Das Testen der Nutzerapplikation unter Verwendung der Test-Eingangsdaten und/oder der Ziel-Ergebnisdaten kann dann beispielsweise derart erfolgen, dass Test-Eingangsdaten aus einer Speichereinrichtung des Applikationsmoduls, oder auch unmittelbar von einem externen Datenlaufwerk, geladen werden, und dann die Nutzerapplikation unter Verwendung der Test-Eingangsdaten abläuft. Weiterhin kann das Testen der Nutzerapplikation derart erfolgen, dass nach Ablauf eins Testens der Nutzerapplikation, beispielsweise unter Verwendung von Test-Eingangsdaten gemäß der vorliegenden Beschreibung, Ergebnisdaten dieses Tests mit zugeordneten Ziel-Ergebnisdaten verglichen werden.

Dieses Vergleichen der Ziel-Ergebnisdaten mit Ergebnisdaten aus einem Testen der Nutzerapplikation kann dann beispielsweise unmittelbar im Applikationsmodul vorgenommen werden. Weiterhin kann auch vorgesehen sein, dass im Rahmen des Testens der Nutzerapplikation ermittelte Ergebnisdaten beispielsweise wieder auf einem lösbar mit dem Applikationsmodul verbindbaren Datenträger gespeichert werden und dann später in einer anderen Datenverarbeitungseinrichtung mit entsprechenden Ziel-Ergebnisdaten verglichen wird. Es kann auch vorgesehen sein, dass beim Testen der Nutzerapplikation ermittelte Ergebnisdaten an eine andere Datenverarbeitungseinrichtung oder Datenspeichereinrichtung übertragen werden, und dann auf einer entsprechenden anderen Recheneinrichtung oder Datenverarbeitungseinrichtung von dort gelesen und mit entsprechenden Ziel-Ergebnisdaten verglichen wird.

Das Starten des Tests-Modus kann beispielsweise gemäß der vorliegenden Beschreibung ausgebildet und eingerichtet sein.

Dabei kann der Testmodus beispielsweise gestartet werden, nachdem eine entsprechende Test-Kennung gemäß der vorliegenden Beschreibung vom Applikationsmodul erkannt wurde. Eine solche Abfrage bzw. ein Erkennen einer solchen Test-Kennung kann beispielsweise beim Booten oder Neu-Starten des Applikationsmoduls erfolgen - oder auch auf eine entsprechende Nutzereingabe oder ein entsprechendes elektrisches oder elektronisches Triggersignal hin. Ein solches Triggersignal kann beispielsweise durch einen entsprechenden Schalter oder einen entsprechenden Taster am Applikationsmodul selbst ausgelöst werden. Weiterhin kann ein solches Triggersignal ein über eine Kommunikationsverbindung übertragenes Triggersignal sein, welches beispielsweise von einem Applikation-Engineeringsystem, einer Steuereinrichtung, einem Automatisierungs-Engineeringsystem oder einer sonstigen Datenverarbeitung oder Recheneinrichtung gesendet oder ausgelöst wird.

Die vorstehend genannte Aufgabe wird auch gelöst durch ein Verfahren zum Beschreiben einer Test-Speichereinrichtung für ein Applikationsmodul gemäß der vorliegenden Beschreibung durch ein Applikations-Engineeringsystem gemäß der vorliegenden Beschreibung,
umfassen die Verfahrensschritte:
Verarbeitung von Test-Eingangsdaten vermittels der Nutzerapplikation und Speicherung von dabei Ermittelten Ziel-Ergebnisdaten,
Beschreiben der Test-Speichereinrichtung mit den Test-Eingangsdaten und/oder den Ziel-Ergebnisdaten durch das Applikations-Engineeringsystem.

Dabei kann die Test-Speichereinrichtung, das Applikationsmodul, das Applikation-Engineeringsystem, die Test-Eingangsdaten, die Nutzerapplikation, die Ziel-Ergebnisdaten sowie das Beschreiben der Test-Speichereinrichtung gemäß der vorliegenden Beschreibung ausgebildet und eingerichtet sein.

Zur Vorbereitung des Testens einer Nutzerapplikation mit dem Applikationsmodul kann das vorliegend genannte Verfahren beispielsweise derart ausgebildet und eingerichtet sein, dass beispielsweise im Applikations-Engineeringsystem Test-Eingangsdaten vermittels der Nutzerapplikation verarbeitet werden und das Ergebnis dieser Verarbeitung als Ziel-Ergebnisdaten abgespeichert wird.

Es kann dann beispielsweise ein Ziel eines Testens der Nutzerapplikation auf dem Applikationsmodul sein, dass beim Ablauf der Nutzerapplikation auf dem Applikationsmodul bei der Verarbeitung der Test-Eingangsdaten durch die auf dem Applikationsmodul ablaufende Nutzerapplikation ebenfalls die Ziel-Ergebnisdaten als Ergebnis erzeugt werden. Wenn dies der Fall ist, so deutet dies auf eine korrekte Funktionalität der Nutzerapplikation auf dem Applikationsmodul hin.

Im Rahmen eines solchen Verfahrens kann beispielsweise vorgesehen sein, dass Test-Eingangsdaten in der Test-Speichereinrichtung gespeichert werden. Dann wird dafür gesorgt, dass das Applikationsmodul auch Zugriff auf die Test-Speichereinrichtung hat, beispielsweise durch Verbinden der Test-Speichereinrichtung mit dem Applikationsmodul. Wenn die Test-Speichereinrichtung bereits Teil des Applikationsmoduls ist, entfällt dieser Schritt, da die Kommunikationsverbindung zum Applikationsmodul bereits hergestellt ist.

Nachfolgend erfolgt ein Testen der Nutzerapplikation im Applikationsmodul derart, dass die Test-Eingangsdaten vermittels eines Ablaufs der Nutzerapplikation verarbeitet werden und dabei Test-Ergebnisdaten erzeugt werden.

Nachfolgend erfolgt ein Vergleich der Test-Ergebnisdaten mit den Ziel-Ergebnisdaten. Dieser Vergleich kann beispielsweise ebenfalls im Applikationsmodul ablaufen. Dafür können beispielsweise dann zusätzlich zu den Test-Eingangsdaten auch die zugehörigen Ziel-Ergebnisdaten auf die Test-Speichereinrichtung geschrieben werden (beispielsweise vom Applikation-Engineeringsystem) so dass auch die Ziel-Ergebnisdaten dem Applikationsmodul bekannt sind.

Weiterhin können die im Rahmen des Tests der Nutzerapplikation auf dem Applikationsmodul ermittelten Test-Ergebnisdaten auch an eine andere Datenverarbeitungseinrichtung, beispielsweise das Applikation-Engineeringsystem, übertragen werden, und der Vergleich der Test-Ergebnisdaten mit den Ziel-Ergebnisdaten erfolgt dort. Dazu können die Test-Ergebnisdaten beispielsweise auch in der Test-Speichereinrichtung gespeichert werden und/oder auch vom Applikationsmodul an die externe Datenverarbeitungseinrichtung übertragen werden.

In einer alternativen Ausgestaltung kann vorgesehen sein, dass nur Ziel-Ergebnisdaten auf die Test-Speichereinrichtung geschrieben werden. Zugehörige Test-Eingangsdaten können beispielsweise über eine Kommunikationsverbindung unmittelbar von einer externen Datenverarbeitungseinrichtung und/oder entsprechenden Geräten, wie beispielsweise einer Kamera, einer Kamera-Simulation, einem Sensor, einer Sensor-Simulation oder vergleichbaren Datenverarbeitungseinrichtungen oder Geräten, an das Applikationsmodul übertragen werden. Das Erzeugen der Ziel-Ergebnisdaten kann wiederum beispielsweise in einer externen Datenverarbeitungseinrichtung, beispielsweise dem Applikation-Engineeringsystem, erfolgen.

Die vorstehend genannte Aufgabe wird auch gelöst durch ein Verfahren zum Beschreiben einer Test-Speichereinrichtung für ein Applikationsmodul gemäß der vorliegenden Beschreibung durch ein Applikations-Engineeringsystem gemäß der vorliegenden Beschreibung, umfassen die Verfahrensschritte:
Verarbeitung von Test-Eingangsdaten vermittels der Nutzerapplikation und Speicherung von dabei Ermittelten Ziel-Ergebnisdaten,
Speichern der Test-Eingangsdaten und/oder der Ziel-Ergebnisdaten in einer vermittels einer ID-Information adressierbaren Speichereinrichtung,
Beschreiben der Test-Speichereinrichtung mit der ID-Information durch das Applikations-Engineeringsystem.

In dieser Ausgestaltung kann beispielsweise vorgesehen sein, dass die Ziel-Ergebnisdaten zum Testen der Nutzerapplikation auf dem Applikationsmodul beispielsweise durch den Ablauf der Nutzerapplikation auf einer externen Datenverarbeitungseinrichtung, beispielsweise dem Applikation-Engineeringsystem, erzeugt werden, indem entsprechende Test-Eingangsdaten im Rahmen des Ablaufs der Nutzerapplikation durch die Nutzerapplikation verarbeitet werden.

Nachfolgend erfolgt die Speicherung der Test-Eingangsdaten und/oder der Ziel Ergebnisdaten in einer Speichereinrichtung, beispielsweise einer Speichereinrichtung in derselben Datenverarbeitungseinheit, in welcher auch das Applikation-Engineeringsystem abläuft, oder einer weiteren Speichereinrichtung in einer anderen Datenverarbeitungseinheit oder auch einer anderen externen Speichereinrichtung. Dabei ist den genannten Speichereinrichtungen jeweils eine entsprechende ID-Information zugeordnet. Eine solche ID-Information kann beispielsweise einen entsprechenden Dateinamen, einen Laufwerksnamen, eine Ordnerstruktur, eine Netzwerkadresse, einen Hyperlink, und/oder vergleichbare ID-Informationen umfassen. Dabei ist eine solche ID-Information derart ausgebildet und eingerichtet, dass durch Erhalt dieser ID-Information das Applikationsmodul in die Lage versetzt wird, auf die in der entsprechenden Speichereinrichtung gespeicherten Ziel-Ergebnisdaten und/oder Test-Eingangsdaten zuzugreifen, wenn eine Kommunikationsverbindung zwischen dem Applikationsmodul und der entsprechenden Speichereinrichtung besteht oder aufgebaut wurde.

In einer vorteilhaften Ausgestaltung kann weiterhin vorgesehen sein, dass eine Test-Kennung gemäß der vorliegenden Beschreibung in die Test-Speichereinrichtung geschrieben wird.

Dabei können die Test-Kennung, das Applikationsmodul sowie die Test-Speichereinrichtung beispielsweise gemäß der vorliegenden Beschreibung ausgebildet und eingerichtet sein.

Die Test-Kennung kann beispielsweise vom Applikationsmodul selbst in die Test-Speichereinrichtung geschrieben werden. Dieses Schreiben der Test-Kennung in die Test-Speichereinrichtung durch das Applikationsmodul kann beispielsweise durch einen entsprechenden Befehl von einer anderen Komponente der Steuereinrichtung, einen entsprechenden Befehl von einer externen Datenverarbeitungs- und/oder Kommunikationseinrichtung und/oder von einem Benutzer veranlasst erfolgen.

Die Test-Kennung kann beispielsweise auch von einer anderen Komponente der Steuereinrichtung, einer externen Datenverarbeitungseinrichtung und/oder einem Applikation-Engineeringsystem gemäß der vorliegenden Beschreibung in die Test-Speichereinrichtung geschrieben werden.

In dem Fall, in welchem das Applikationsmodul die Test-Speichereinrichtung umfasst, wenn die Test-Kennung in die Test-Speichereinrichtung geschrieben wird, muss dann die externe Datenverarbeitungseinrichtung, die andere Komponente der Steuereinrichtung und/oder das Applikation-Engineeringsystem kommunikativ mit dem Applikationsmodul verbunden sein, um die Test-Kennung in die Test-Speichereinrichtung zu schreiben.

Weiterhin kann die Test-Speichereinrichtung auch lösbar verbindbar mit dem Applikationsmodul verbunden sein. Dabei kann vorgesehen sein, dass beim Schreiben der Test-Kennung in die Test-Speichereinrichtung die Test-Speichereinrichtung nicht kommunikativ mit dem Applikationsmodul verbunden ist. Dies kann beispielsweise so realisiert sein, dass die Test-Speichereinrichtung als eine SD-Karte ausgebildet und eingerichtet ist und zum Schreiben der Test-Kennung auf die Test-Speichereinrichtung aus dem Applikationsmodul entnommen und beispielsweise kommunikativ mit einer externen Datenverarbeitungseinrichtung und/oder einem Applikation-Engineeringsystem gemäß der vorliegenden Beschreibung verbunden wird.

Weiterhin kann vorgesehen sein, dass die Nutzerapplikation in die Test-Speichereinrichtung geschrieben wird.

Dabei können die Nutzerapplikation, das Applikationsmodul sowie die Test-Speichereinrichtung beispielsweise gemäß der vorliegenden Beschreibung ausgebildet und eingerichtet sein.

Die Nutzerapplikation kann beispielsweise vom Applikationsmodul selbst in die Test-Speichereinrichtung geschrieben werden. Dieses Schreiben der Nutzerapplikation in die Test-Speichereinrichtung durch das Applikationsmodul kann beispielsweise durch einen entsprechenden Befehl von einer anderen Komponente der Steuereinrichtung, einen entsprechenden Befehl von einer externen Datenverarbeitungs- und/oder Kommunikationseinrichtung und/oder von einem Benutzer veranlasst erfolgen.

Die Nutzerapplikation kann beispielsweise auch von einer anderen Komponente der Steuereinrichtung, einer externen Datenverarbeitungseinrichtung und/oder einem Applikations-Engineeringsystem gemäß der vorliegenden Beschreibung in die Test-Speichereinrichtung geschrieben werden.

In dem Fall, in welchem das Applikationsmodul bei dem Schreiben der Nutzerapplikation in die Test-Speichereinrichtung die Test-Speichereinrichtung umfasst, muss dann die externe Datenverarbeitungseinrichtung, die andere Komponente der Steuereinrichtung und/oder das Applikations-Engineeringsystem zum Schreiben der Nutzerapplikation in die Test-Speichereinrichtung kommunikativ mit dem Applikationsmodul verbunden sein.

Weiterhin kann die Test-Speichereinrichtung auch lösbar mit dem Applikationsmodul verbunden oder verbindbar sein. Dabei kann vorgesehen sein, dass beim Schreiben der Nutzerapplikation in die Test-Speichereinrichtung die Test-Speichereinrichtung nicht mit dem Applikationsmodul verbunden ist. Dies kann beispielsweise so realisiert sein, dass die Test-Speichereinrichtung zum Schreiben der Nutzerapplikation aus dem Applikationsmodul entnommen und beispielsweise mit einer externen Datenverarbeitungseinrichtung und/oder einem Applikation-Engineeringsystem gemäß der vorliegenden Beschreibung verbunden wird oder ist.

Weitere vorteilhafte Ausgestaltungen finden sich in den Unteransprüchen.

Nachfolgend wird die vorliegende Erfindung beispielhaft mit Bezug auf die beigefügten Figuren näher erläutert.

Es zeigen:
Figur 1: Produktionssystem mit automatischer optischer Inspektion (AOI) und einer Speicherprogrammierbaren Steuerung (SPS) mit einem AI-Modul;
Figur 2: Setup zum Einrichten des AI-Moduls gemäß Figur 1 und zum Testen eines im AI-Modul implementierten Neuronalen Netzes;
Figur 3: Alternatives Setup zum Einrichten des AI-Moduls und Testen des neuronalen Netzes gemäß Figur 1;
Figur 4: Alternatives Produktionssystem mit AOI und einer Soft-SPS mit einer AI-App;
Figur 5: Setup zum Einrichten der AI-App gemäß Figur 4 und zum Testen eines dort implementierten Neuronalen Netzes;
Figur 6: Alternatives Setup zum Einrichten der AI-App gemäß Figur 4 und Testen des neuronalen Netzes;

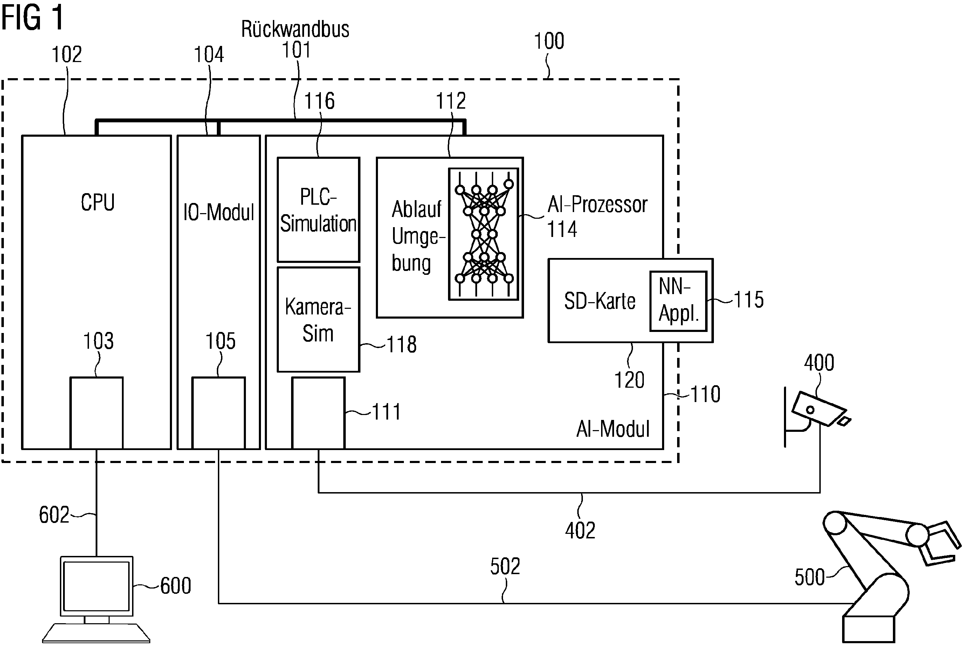

Figur 1 zeigt ein Produktionssystem mit einem Roboter 500, der von einer modularen Speicherprogrammierbaren Steuerung (SPS) 100 gesteuert wird. Das Produktionssystem in Figur 1 umfasst weiterhin eine Produktkontrolle über eine automatische optische Inspektion (AOI) unter Verwendung einer Kamera 400, wobei das AOI-System eine Bildauswertung unter Verwendung eines AI-Moduls 110 der SPS 100 umfasst (AI: Artificial Intelligence (Künstliche Intelligenz)).

Dabei ist die speicherprogrammierbare Steuerung 100 ein Ausführungsbeispiel für eine Steuereinrichtung gemäß der vorliegenden Beschreibung. Das AI-Modul 110 ist ein Ausführungsbeispiel für ein Applikationsmodul gemäß der vorliegenden Beschreibung.

Dabei funktioniert das AOI-System so, dass die Kamera 400 vom Roboter 500 hergestellte Produkte nach ihrer Herstellung fotografiert, diese Bilder zum AI-Modul 110 übertragen und im AI-Modul 110 der SPS 100 ausgewertet werden. Beim Erkennen eines fehlerhaften Produkts sondert der Roboter 500 dieses dann zur Nachkontrolle aus dem automatisierten Produktionsablauf aus.

Das AI-Modul 110 ist dabei zur Bildauswertung unter Verwendung eines neuronalen Netzes ausgebildet und eingerichtet. Dazu umfasst das AI-Modul 110 eine Ablaufumgebung 112 mit einem AI-Beschleuniger-Chip 114, der zum beschleunigten Betrieb bzw. zum beschleunigten Ablauf einer im AI-Modul verwendeten neuronalen-Netz-Applikation (NN-Applikation) 115, bzw. eines im AI-Modul implementierte neuronalen Netzes 115, ausgebildet und eingerichtet ist. Dabei ist die neuronale-Netz-Applikation 115 als ein ablauffähiger Code auf einer SD-Karte 120 gespeichert, die in Figur 1 lösbar mit dem AI-Modul 110 verbunden ist. Das neuronale Netz 115 ist dabei z.B. in einer entsprechenden Programmiersprache (z.B. "Python") als ablauffähiger Code realisiert.

Hierbei ist die SD-Karte 120 ein Ausführungsbeispiel für eine Test-Speichereinrichtung gemäß der vorliegenden Beschreibung und die Neuronale-Netz-Applikation (NN-Applikation) 115 bzw. das neuronale Netz 115 ein Ausführungsbeispiel für eine Nutzerapplikation gemäß der vorliegenden Beschreibung.

In der nachfolgenden Beschreibung wird die Neuronale-Netz-Applikation 115 oder auch NN-Applikation 115 teilweise auch das neuronale Netz 115 genannt.

Bei der auf der SD-Karte 120 gespeicherten NN-Applikation 115 handelt es sich dabei um ein beispielsweise mittels eines überwachten Lernverfahrens trainiertes neuronales Netz 115. Dabei wurde das neuronale Netz 115 so trainiert, dass es anhand der von der Kamera 400 aufgenommenen Bildern qualitativ einwandfreie Produkte von fehlerhaften bzw. möglicherweise fehlerhaften Produkten unterscheiden kann. Ein solches Training kann beispielsweise derart erfolgen, dass bei einer Vielzahl von Produktbildern jedem Bild eine Information (ein sogenannter "Label") zugeordnet wurde, ob es sich dabei um ein qualitativ einwandfreies oder ein fehlerhaftes Produkt handelt. Vermittels dieser Trainings-Bilder und der zugehörigen "Labels" kann dann das neuronale Netz 115 mit einem überwachten Lernverfahren gemäß dem Stand der Technik trainiert werden. Im vorliegenden Fall wurde die NN-Applikation 115 beispielsweise vermittels eines solchen Verfahrens zum Erkennen fehlerhafter Produkte trainiert.

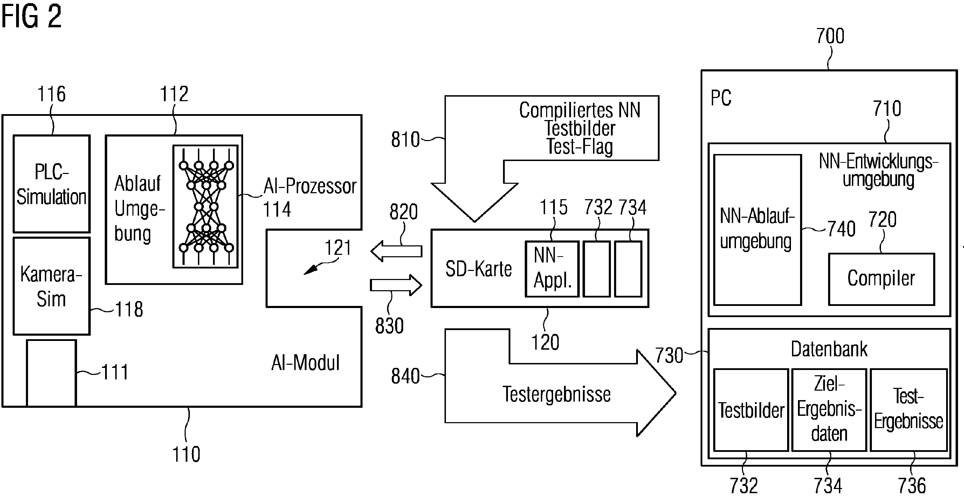

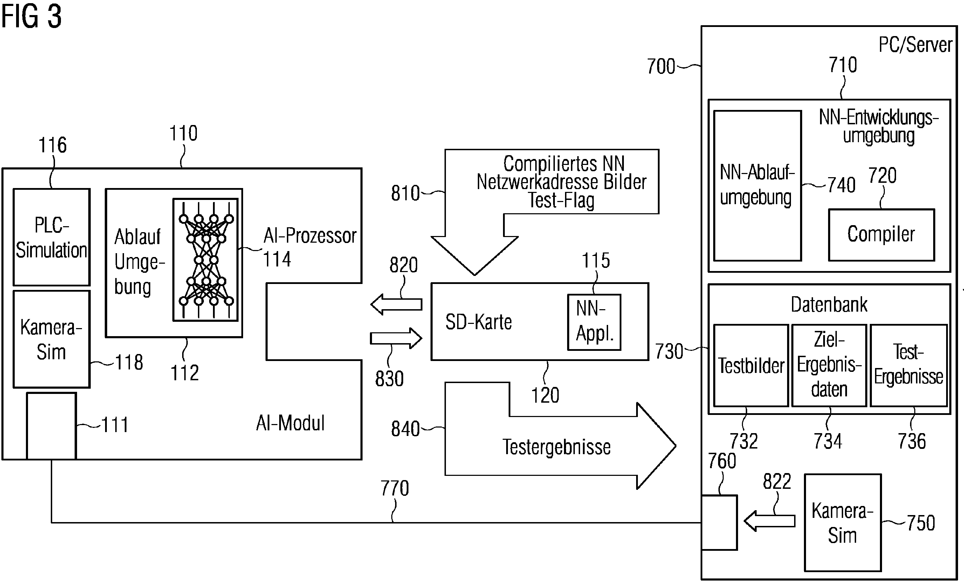

Das AI-Modul umfasst weiterhin eine Ethernet-Schnittstelle 111, über welche das AI-Modul 110 über eine Ethernet-Verbindung 402 kommunikativ mit der Kamera 400 oder anderen externen Geräten oder Datenverarbeitungseinrichtungen, wie Computern oder ähnlichem, verbunden oder verbindbar ist. Weiterhin umfasst das AI-Modul 110 eine SPS-Simulation 116 sowie eine Kamerasimulation 118, deren Funktionalität im Rahmen des Einrichtens des AI-Moduls 110 und/oder des Testens des der NN-Applikation 115 im Zusammenhang mit den Figuren 2 und 3 näher erläutert wird.

Weiterhin umfasst die SPS 100 eine Zentraleinheit 102 oder auch CPU 102, die beispielsweise zum Ablauf eines Steuerprogramms zur Steuerung des Roboters 500 sowie eines AOI-Qualitätskontrolle-Verfahrens vermittels der Kamera 400 ausgebildet und eingerichtet ist. Die Zentraleinheit 102 der SPS 100 umfasst weiterhin eine OPC-UA Schnittstelle 103 zur Kommunikation mit einem Automatisierungs-Engineeringsystem 600 über eine OPC-UA-Kommunikationsverbindung 602.

Zur Kommunikation der SPS 100 mit dem Roboter 500 umfasst die SPS 100 weiterhin eine Eingabe-Ausgabe-Modul 104 oder 10-Modul 104 mit einer Feldbusschnittstelle 105. Dabei ist die SPS 100 derart ausgebildet und eingerichtet, dass Steuersignale von der SPS 100 über das IO-Modul 104 und eine Feldbusverbindung 502 an den Roboter 500 übertragen werden. Entsprechende Sensorsignale oder sonstige Informationen vom Roboter 500 zur SPS 100 werden über die Feldbusverbindung 502 zurück zum IO-Modul 104 der SPS 100 übertragen. Weiterhin sind die Zentraleinheit 102, dass IO-Modul 104 sowie das AI-Modul 110 über einen Rückwandbus 101 der SPS 100 kommunikativ verbunden, wobei der Rückwandbus 101 zur Echtzeitkommunikation zwischen den Modulen 102, 104, 110 der SPS 100 ausgebildet und eingerichtet ist.

Dabei kann die SPS 100 derart ausgebildet und eingerichtet sein, dass Steuerbefehle beispielsweise im Rahmen des Ablaufs eines entsprechenden Steuerprogramms in der Zentraleinheit 102 erzeugt werden, über den Rückwandbus 101 an das IO-Modul 104 übertragen werden und dann über die Feldbus-Schnittstelle 105 des IO-Moduls 104 und die Feldbus-Verbindung 502 an den Roboter 500 übertragen werden. Entsprechende Sensorsignale oder andere Informationen vom Roboter 500 werden dann beispielsweise wiederum über die Feldbus Verbindung 502 und die Feldbus-Schnittstelle 105 des IO-Moduls 104 und weiterhin den Rückwandbus 101 zur Zentraleinheit 102 der SPS 100 übertragen und dort beispielsweise wieder als Eingangsgröße für das Steuerprogramm verwendet.

Das Automatisierungs-Engineeringsystem ist zum Einrichten der SPS 100 ausgebildet und eingerichtet. In diesem Zusammenhang wird über das Automatisierungs-Engineeringsystem beispielsweise das oben genannte Steuerprogramm bzw. die oben genannten Steuerprogramme erstellt. Weiterhin werden beispielsweise die Feldbus Verbindung 502 zum Roboter 500 sowie die Kommunikation über den Rückwandbus 101 zwischen den Modulen 102, 104, 110 der SPS 100 eingerichtet und parametriert. Auch die Module 102,104, 110 der SPS 100 werden über das Automatisierungs-Engineeringsystem parametriert, konfiguriert und eingerichtet.

In Figur 2 ist schematisch ein System sowie ein Verfahrensablauf zum Testen der NN-Applikation 115 mit dem AI-Modul 110 dargestellt. Dabei ist das AI-Modul 110 wie bereits im Zusammenhang mit Figur 1 näher erläutert ausgebildet und eingerichtet, wobei die SD Karte 120 im in Figur 2 dargestellten Zustand aus dem AI-Modul 110 entnommen ist. Neben der NN-Applikation 115 sind auf der SD-Karte 120 weiterhin Testbilder 732 sowie Soll- oder Ziel-Ergebnisse 734 gespeichert, wobei Ausgestaltung, Zustandekommen sowie die Verwendung der Soll- oder Ziel-Ergebnisse 734 nachfolgend noch näher erläutert wird.

Dabei sind die Testbilder 732 Ausführungsbeispiele für Test-Eingangsdaten gemäß der vorliegenden Beschreibung und die Soll- oder Ziel-Ergebnisse 734 Ausführungsbeispiele für Ziel-Ergebnisdaten gemäß der vorliegenden Beschreibung.

Weiterhin ist in Figur 2 ein PC 700 dargestellt welcher eine Entwicklungsumgebung 710 zum Erstellen und Testen eines neuronalen Netzes bzw. der neuronalen Netz-Applikation 115 umfasst. Dabei wird diese Entwicklungsumgebung 710 zum Erstellen und Testen des neuronalen Netzes 115 nachfolgend auch NN-Entwicklungsumgebung 710 genannt. Die NN-Entwicklungsumgebung 710 umfasst weiterhin eine Ablaufumgebung 740 zum Ablaufen und Testen eines in der NN-Entwicklungsumgebung 710 entwickelten neuronalen Netzes.

Weiterhin umfasst die NN-Entwicklungsumgebung 710 einen Compiler 720 für verschiedene Beschleunigungs-Prozessoren 114 oder Beschleunigungs-Software-Applikationen 253, die zum beschleunigten Ablauf von Neuronale-Netz-Applikationen ausgebildet und eingerichtet sind. Ein Beispiel für einen derartigen Beschleunigungs-Prozessor ist der AI-Prozessor 114 des AI-Moduls 110. Mittels des Compilers 720 kann ein in der NN-Entwicklungsumgebung 710 entwickeltes neuronales Netz zum verbesserten oder optimierten Ablauf auf einem der genannten Beschleunigungs-Prozessoren 114 oder Beschleunigungs-Software-Applikationen 253 umgewandelt und/oder angepasst werden. In der Regel ist die Umwandlung einer neuronalen Netz-Applikation vermittels des Compiler 720 nötig, damit das neuronale Netz dann korrekt und optimiert auf einem entsprechenden Beschleunigung-Prozessor 114, 253, wie beispielsweise dem AI-Prozessor 114 abläuft.

Weiterhin umfasst der PC 700 eine Datenbank 730 welche Testbilder 732 zum Testen der in der NN-Entwicklungsumgebung 710 entwickelten NN-Applikation 115. Weiterhin umfasst die Datenbank Soll- oder Ziel-Ergebnisse 734, welche die Ergebnisse darstellen, die durch Anwendung der Testbilder 732 auf das in der Neuronale-Netz-Ablaufumgebung 740 der NN-Entwicklungsumgebung 710 ablaufende NN-Applikation 715 entstehend.

Zur Verwendung der in der NN-Entwicklungsumgebung 710 im PC 700 entwickelten NN-Applikation 115 im AI-Modul 110 muss nun die NN-Applikation 115 durch den Compiler 720 in eine für den AI-Prozessor 114 geeignete bzw. optimierte NN-Applikation 115 umgewandelt werden.

Durch die Umwandlung der NN-Applikation 115 durch den Compiler 720 kann es nun gegeben sein, dass die umgewandelte NN-Applikation 115 beim Ablauf im AI-Prozessor 114, oder zumindest im Zusammenwirken mit dem AI-Prozessor 114, eine zumindest im Detail abweichende Funktionalität aufweist. Dies muss nun im Rahmen eines Tests dieser umgewandelten NN-Applikation 115 im AI-Modul 110 überprüft bzw. getestet werden.

Der Test läuft dabei wie nachfolgend beschrieben ab. In einem ersten Arbeitsschritt 810, in Figur 2 als Pfeil 810 dargestellt, wird die umgewandelte bzw. kompilierte NN-Applikation 115, nachfolgend z.T. vereinfacht auch nur NN-Applikation 115 genannt, auf die Speicherkarte bzw. SD-Karte 120 gespeichert. Weiterhin werden die Testbilder 732 sowie die Soll- oder Ziel-Ergebnisse 734 in diesem Arbeitsschritt 810 ebenfalls auf der SD-Karte 120 gespeichert. Zudem wird in diesem Schritt 810 noch ein Test-Flag auf der SD Karte gespeichert, anhand dessen das AI-Modul 110 erkennt, dass ein Test der auf der SD Karte 120 gespeicherten kompilierten NN-Applikation 115 gestartet werden soll.

In einem nächsten Arbeitsschritt 820 wird die SD-Karte 120 dann in einen entsprechenden SD-Karten Slot 121 des AI-Moduls 110 eingeführt und über einen entsprechenden Steckverbinder, der nicht in Figur 2 dargestellt ist, kommunikativ mit dem AI-Modul 110 verbunden. Das AI-Modul 110 mit der SD-Karte 120 ist nun in dem Zustand, in dem diese Komponenten in Figur 1 dargestellt sind.

Das AI-Module 110 ist derart ausgebildet und eingerichtet, dass beim Booten, Starten und/oder Neustart des AI-Moduls 110 vom Betriebssystem des AI-Moduls 110 geprüft wird, ob eine SD-Karte 120 im AI-Modul 110 vorhanden ist und, wenn ja, ob auf der SD-Karte 120 ein Test-Flag gespeichert ist. Findet das Betriebssystem des AI-Moduls 110 ein derartiges Test-Flag auf der SD-Karte 120, so wird ein Test-Modus im AI-Modul 110 gestartet.

Dabei ist der Test-Modus derart ausgebildet und eingerichtet, dass ein Ablauf der NN-Applikation 115 im AI-Modul 110 erfolgen kann, ohne dass weitere Module 102, 104 der SPS 100 - oder auch sonstige Komponenten des Automatisierungssystems, wie die Kamera 400 oder der Roboter 500 - benötigt werden. Weiterhin ist der Test-Modus des AI-Modul 110 derart ausgebildet und eingerichtet, dass auf der SD-Karte Informationen bezüglich Testdaten zum Testen einer entsprechenden NN-Applikation, beispielsweise der kompilierten NN-Applikation 115 im vorliegenden Ausführungsbeispiel, gesucht und ausgelesen werden. Im vorliegenden Beispiel sind solche Testdaten beispielsweise die Testbilder 732 zum Testen der kompilierten NN-Applikation 115. Derartige Informationen bezüglich Testdaten können aber auch beispielsweise eine Netzwerkadresse, ein Netzwerkname, ein Hyperlink, eine IP-Adresse oder vergleichbare Informationen sein, unter welchen entsprechende Testdaten, beispielsweise im vorliegenden Fall die Testbilder 732, gespeichert sind und beispielsweise vom AI-Modul herunterladbar sind. Ein Ausführungsbeispiel für eine derartige Ausgestaltung wird beispielsweise im Zusammenhang mit Figur 3 näher erläutert.

Das AI-Modul 110 ist derart ausgebildet und eingerichtet, dass es als Erweiterungsmodul zum Zentralmodul 102 der SPS 100 ausgebildet und eingerichtet ist und während des normalen Betriebsablaufs der SPS 100 mit dem Zentralmodul 102 zusammenwirkt. Damit im Test-Modus das AI-Modul 110 auch ohne zentral-Modul 102 ordnungsgemäß funktioniert, umfasst das AI-Modul 110 die PLC-Simulation 116, welche die für das Funktionieren des AI-Moduls 110 nötige Funktionalität umfasst, die normalerweise vom Zentralmodul 102 zur Verfügung gestellt wird.

Zu einer solchen Basisfunktionalität der PLC-Simulation 116 im vorliegenden Ausführungsbeispiel gehört z.B.:
(1) Simulation normalerweise vom Zentralmodul 102 gesendeten Triggern,
(2) Eine Bereitstellung des Bildes, wenn ein Bild von der NN-Applikation 115 angefordert wird,
(3) eine Bereitstellung des zweiten Bildes auf Anfrage der NN-Applikation 115,
(4) Sammeln der Ergebnisse 736 der Verarbeitung der Bilder mit dem kompilierten neuronalen Netz 115, und
(5) Schreiben der Ergebnisse 736 in eine auf der SD-Karte gespeicherte Datei mit einer Kennung der verwendeten Eingaben (dies ist in Figur 2 nicht dargestellt).
(6) In einem letzten Schritt werden die Ergebnisse 736 des Ablaufs der kompilierten NN-Applikation 115 auf dem AI-Modul 110 mit den Soll- oder Ziel-Ergebnissen 734 verglichen und eine entsprechende Meldung ausgegeben und/oder auf der SD-Karte gespeichert, ob alle mit dem Applikationsmodul 110 ermittelten Ergebnisse mit den Soll- oder Ziel-Ergebnissen 734 übereinstimmen, oder bei welchen der Testbilder 732 es Abweichungen zwischen der vom AI-Modul 110 ermittelten Ergebnissen gegenüber den Soll- oder Ziel-Ergebnissen 734 gibt.
(6a) In einer alternativen Ausgestaltung des vorstehend genannten Schrittes (6) kann dieser Vergleich der vom AI-Modul 110 ermittelten Ergebnisse 736 mit den Sollergebnissen 734 auch im PC 700 erfolgen. Dazu werden dann die vom AI-Modul 110 ermittelten Ergebnisse 736 auf die SD-Karte 120 geschrieben und in einem weiteren Ausführungsschritt 840 die SD Karte wiederum mit dem PC 700 kommunikativ verbunden. Dann werden diese Ergebnisse 736 ebenfalls in der Datenbank 730 im PC 700 gespeichert und der Vergleich zwischen den Soll- oder Ziel-Ergebnissen 734 und den Ergebnissen des AI-Moduls 736 im PC 700 vorgenommen.

Da das AI-Modul 110 im vorliegenden Ausführungsbeispiel derart ausgebildet und eingerichtet ist, dass die in der Ablaufumgebung 102 ausgeführten neuronalen Netze 115 Bilder von einer Kamera 400 über die Ethernet-Schnittstelle 111 erwarten, ist im AI-Modul 110 zur ordnungsgemäßen Ausführung des Test-Modus unabhängig von der Kamera 400 die Kamerasimulation 118 vorgesehen. Wird von der Ablaufumgebung 112 nun ein Bild zur Bearbeitung mit dem neuronalen Netz 115 angefordert, so ist der Testmodus des AI-Moduls 110 derart ausgebildet und eingerichtet, dass stattdessen die Kamerasimulation 118 angesprochen wird. Die Kamerasimulation 118 übernimmt dann das Einlesen der Testbilder 732 und gibt sie entsprechend an die Ablaufumgebung 112 weiter.

Figur 3 zeigt ein weiteres Ausführungsbeispiel des Testens der kompilierten NN-Applikation 115 auf dem AI-Modul 110.

Dabei entspricht der prinzipielle Verfahrensablauf des Testens der NN-Applikation 115 dem im Zusammenhang mit Figur 2 bereits erläuterten Ablauf. Im Unterschied zu dem im Zusammenhang mit Figur 2 erläuterten Verfahrensablauf sind bei dem alternativen Test-Ablauf, wie er in Figur 3 dargestellt ist, die Testbilder 732 nicht auf der SD Karte 120 gespeichert. Stattdessen wird im Verfahrensschritt 810 neben dem kompilierten neuronalen Netz-Applikation 115 und dem Test-Flag nur eine Netzwerkadresse der Testbilder 732 gespeichert, unter welcher die Testbilder 732 vom AI-Modul 110 über eine Ethernet-Verbindung 770 ladbar sind.

Nach dem Einbringen der SD-Karte 120 in das AI-Modul 110 im Verfahrensschritt 820 wird nun im Rahmen des Ablaufs des kompilierten neuronalen Netz-Applikation 115 durch die Ablaufumgebung 112 bei der Anforderung eines der Testbilder 732 die Netzwerkadresse der Testbilder von der SD-Karte 120 eingelesen und über die Kamerasimulation 118 und die Ethernet-Schnittstelle 111 das entsprechende Bild über die Ethernet-Verbindung 770 aus der Datenbank 730 des PCs 700 eingelesen. Dazu ist im PCT 700 ebenfalls eine Kamera-Simulation 750 vorgesehen, welche in einem Zwischenschritt 822 die angeforderten ein oder mehreren Testbilder 732 aus der Datenbank 730 ausliest und diese über eine Ethernet-Schnittstelle 760 des PC 700 und die Ethernet-Verbindung 770 an das AI-Moduls 110 überträgt.

Im AI-Modul 110 werden dann diese ein oder mehreren Testbilder 732 über die Kamerasimulation 118 der Ablaufumgebung 112 zur Verfügung gestellt und mit dem kompilierten neuronalen Netz 115 unter Verwendung des AI-Prozessors 114 verarbeitet.

Im in Figur 3 dargestellten Ausführungsbeispiel ist der Test-Modus des AI-Moduls 110 dabei derart ausgebildet und eingerichtet, dass die bei der Verarbeitung der Testbilder 732 mit dem kompilierten neuronalen Netz 115 erhaltenen Ergebnisse 736 unmittelbar über die Ethernet-Schnittstelle 111 des AI Moduls 110, die Ethernet-Verbindung 770 sowie die Ethernet-Schnittstelle 760 unmittelbar in der Datenbank 730 gespeichert werden.

In einem nachfolgenden Schritt werden dann die Soll- oder Ziel-Ergebnisse 734 mit den vom AI-Modul 110 erzeugten Ergebnissen 736 verglichen und das Ergebnis dieses Vergleichs an einen Nutzer ausgegeben.

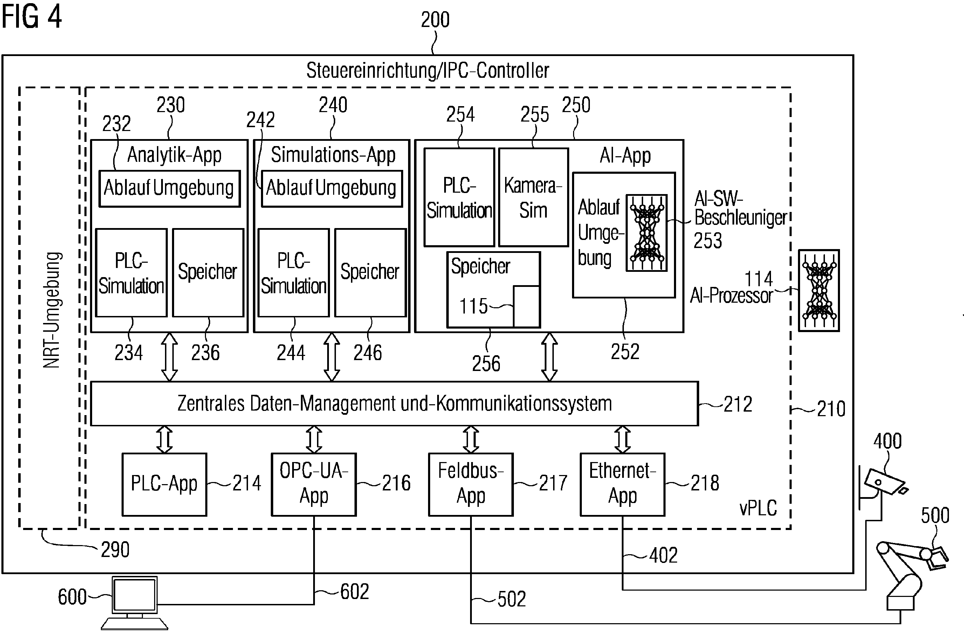

In Figur 4 ist das bereits in Zusammenhang mit Figur 1 erläuterte Automatisierungssystem mit einer als Industrie-PC 200 ausgebildeten alternativen Steuereinrichtung 200 statt der in Figur 1 dargestellten SPS 100. Der Industrie-PC 200 umfasste eine sogenannten "Soft-SPS" 210 oder "virtuelle PLC" (vPLC) 210. Die grundlegende Funktionalität des in Figur 4 dargestellten Systems, abgesehen von der konkreten Ausgestaltung der Steuerungseinrichtung 200, entspricht dabei der des Systems aus Figur 1. In Figur 4 und Figur 1 mit gleichen Bezugszeichen versehene Komponenten entsprechen einander.

Die Soft-SPS 210 oder vPLC 210 ist als eine in Software realisierte Speicherprogrammierbare Steuerung 210 ausgebildet und eingerichtet. Dazu ist die Soft-SPS 210 als eine Echtzeit-Ablaufumgebung 210 oder Realtime-Ablaufumgebung (RT-Umgebung) 210 ausgebildet, wobei einzelne Funktionalitäten und/oder Module der SPS 210 als in der RT-Umgebung 210 implementierte Software-Applikationen realisiert sind.

Dabei sind die Soft-SPS 210 bzw. vPLC 210 sowie auch der Industrie-PC 200 Ausführungsbeispiele für eine Steuereinrichtung gemäß der vorliegenden Beschreibung.

Die in Figur 2 dargestellte Soft-SPS 210 umfasst dabei eine PLC-Applikation 214 oder PLC-App 214, die im Wesentlichen die grundlegenden Funktionalitäten einer speicherprogrammierbaren Steuerung, beispielsweise gemäß dem Standard IEC 61131 und/oder EN 61499, aufweist. Die PLC-App 214 kann beispielsweise auch die Funktionalität eines Zentralmoduls einer speicherprogrammierbaren Steuerung, wie beispielsweise eine Funktionalität des in Figur 1 dargestellten Zentralmoduls 102, aufweisen oder umfassen.

Weiterhin umfasst die Soft-SPS 210 eine Feldbus-Schnittstellen-Applikation 217 oder Feldbus-App 217 zur Ankopplung der Soft-SPS 210 an einen Feldbus 502. Dabei kann die Feldbus-App 217 beispielsweise als eine Profinet-App 217, eine EtherCAT-App 217, eine EthernetIP-App 217, eine Profibus-App 217 oder eine Feldbus-App 217 für vergleichbare Feldbusse ausgebildet und eingerichtet sein.

Die Soft-SPS 210 umfasst weiterhin eine Ethernet-Schnittstellen-Applikation 218 oder Ethernet-App 218 zur Kommunikation der Soft-SPS 210 über das Ethernet-Protokoll oder eine entsprechende Kommunikationsverbindung 402. Weiterhin umfasst die Soft-SPS 210 auch eine OPC-UA-App oder OPC-UA-Schnittstellen-Applikation 216 zur Kommunikation der Soft-SPS 210 über das OPC-UA-Protokoll, z.B. über eine entsprechende OPC-UA-Kommunikationsverbindung 602.

Weiterhin umfasst die Soft-SPS 210 drei frei programmierbare Applikationen 230, 240, 250, die als eine AI-Applikation 250 oder AI-App 250 (AI: Artificial Intelligence (Künstliche Intelligenz)), eine Simulations-Applikation 240 oder Simulations-App 240 sowie eine Analytik-Applikation 230 oder Analytik-App 230 ausgestaltet und eingerichtet sind. Dabei sind die AI-App 250, die Simulation-App 240 sowie die Analytik-App 230 Beispiele für Applikationsmodule gemäß der vorliegenden Beschreibung.

Dabei weist die AI-App 250 im Wesentlichen die Funktionalität des in Figur 1 dargestellten AI-Moduls 110 auf. Dazu umfasst die AI-App 250 eine Ablaufumgebung 252 zum Ablauf einer in einem Nutzerdatenspeicher 256 gespeicherten neuronalen-Netz-Applikation 115 oder NN-Applikation 115, welche der NN-Applikation 115 und/oder kompilierten NN-Applikation 115, wie sie bereits im Zusammenhang mit den Figuren 1-3 erläutert wurde, entspricht. Die NN-Applikation 115 ist wiederum ein Beispiel für eine Nutzerapplikation gemäß der vorliegenden Beschreibung.

Weiterhin umfasst die Ablaufumgebung 252 der AI-App 250 einen als Softwaremodul ausgestalteten AI-Software-Beschleuniger 253, der zum beschleunigten Ablauf der NN-Applikation 115 ausgebildet und eingerichtet ist. Alternativ kann die Ablaufumgebung 252 der AI-App 250 auch auf einen in Hardware ausgebildeten AI-Prozessor 114 des IPCs 200 zurückgreifen, um einen beschleunigten Ablauf der NN-Applikation 115 zu erreichen. Dabei entspricht der AI-Prozessor 114 des IPC 200 dem AI-Prozessor 114, wie er bereits im Zusammenhang mit Figur 1 erläutert wurde.

Weiterhin umfasst die AI-App 250 eine PLC-Simulation 254 sowie eine Kamera-Simulation 255, die in ihrer Funktionalität der bereits im Zusammenhang mit den Figuren 1-3 erläuterten PLC-Simulation 116 sowie Kamera-Simulation 118 des AI-Moduls 110 entsprechen.

Die Simulations-App 240 der Soft-SPS 210 ist zum Ablauf eines in einem Nutzerdatenspeicher 246 der Simulation-App 240 abgespeicherten Simulations-Programms ausgebildet und eingerichtet. Dabei ist das Simulations-Programm ein Beispiel für eine Nutzerapplikation gemäß der vorliegenden Beschreibung. Um beispielsweise ein Testen des Simulations-Programms innerhalb der Simulation-Applikation 240 auch dann zu ermöglichen, wenn die Simulation-Applikation zur 140 nicht in der Soft-SPS 210 installiert ist, umfasst die Simulation Applikation zur 140 weiterhin eine PLC-Simulation 244. Diese umfasst beispielsweise die Funktionalitäten der PLC-App 214, die zum ordnungsgemäßen Ablauf des Simulationsprogramms in der Simulation-App 240 notwendig sind.

In vergleichbarer Weise ist auch die Analytik-App 230 aufgebaut, die eine Ablaufumgebung 232 zum Ablauf eines in einem Nutzerdatenspeicher 236 gespeicherten Analytikprogramms zur mathematischen Analyse von Daten ausgebildet und eingerichtet ist. Auch hier ist das Analytikprogramm ein Beispiel für eine Nutzerapplikation gemäß der vorliegenden Beschreibung. Um auch ein Testen des Analytikprogramms in der Analytik-App 230 zu ermöglichen, wenn diese nicht in der Soft-SPS 210 implementiert ist, umfasst auch die Analytik-App 230 eine PLC-Simulation 234 zur Simulation derjenigen Funktionalitäten der PLC-App 314, die zum ordnungsgemäßen Ablauf des Analytikprogramms innerhalb der Analytik-App 230 notwendig sind.

Zur Kommunikation innerhalb der Soft-SPS 210 umfasst diese ein zentrales Daten-Management und -Kommunikationssystem 212, über welches die Applikationen 214, 216, 217, 218, 230, 240, 250 der Soft-SPS 210 kommunikativ verbunden sind. Dabei ist das zentrale Daten-Management und -Kommunikationssystem 212 sowohl zur Echtzeit-Kommunikation zwischen den Applikationen 214, 216, 217, 218, 230, 240, 250 der Soft-SPS 210 als auch zur Nicht-Echtzeit-Kommunikation zwischen den Applikationen 214, 216, 217, 218, 230, 240, 250 der Soft-SPS 210 ausgebildet und eingerichtet. Dabei kann das zentrale Daten-Management und -Kommunikationssystem 212 beispielsweise zur Übertragung von Daten zumindest unter anderem über ein sogenanntes Publish-Subscribe-Kommunikationsschema (Pub-Sub-Kommunikationsschema) ausgebildet und eingerichtet sein - und/oder zumindest unter anderem auch ein sogenanntes "Shared Memory" bzw. einen sogenannten "Dual-Port-RAM" verwenden.

Die Funktionalität des IPC 200 bzw. der Soft-SPS 210 entspricht dabei derjenigen der SPS 100, wie sie bereits im Zusammenhang mit Figur 1 beschrieben wurde. Über ein innerhalb der PLC-App 214 ablaufendes Steuerungsprogramm wird der Roboter 500 gesteuert, indem entsprechende Steuersignale über die Feldbus-App 217 und die Feldbusverbindung 502 an den Roboter 500 ausgegeben werden. Über dieselbe Kommunikationsverbindung werden entsprechende Sensorsignale des Roboters 500 und auch sonstige Informationen vom Roboter 500 an das Steuerprogramm bzw. die PLC App 214 zurückübertragen.

Zur Prozesskontrolle der vom Roboter 500 gefertigten Produkte werden von der Kamera 400 wiederum Bilder der gefertigten Produkte aufgenommen und diese über eine Internetleitung 402 und die Ethernet-App 218 an die Soft-SPS 210 übertragen. Die Auswertung der aufgenommenen Bilder erfolgt innerhalb der AI-App 250 der Soft-SPS 210, indem diese in der bereits im Zusammenhang mit Figur 1 beschriebenen Weise vom neuronalen Netz 115 der AI App 250 analysiert werden. Auch hier werden die Analyseergebnisse von der AI-App 250 über das zentrale Daten-Management und -Kommunikationssystem 212 an die PLC-App 214 ausgegeben. Sollte sich aus einem von der AI-App 250 ermittelten Ergebnis ergeben, dass ein gefertigtes Produkt Mängel aufweisen könnte und nachkontrolliert werden sollte, so wird dann eine entsprechende Mitteilung an einen Benutzer ausgegeben. Gleichzeitig kann in diesem Fall ein entsprechender Befehl an den Roboter 500 ausgegeben werden, dass dieser dieses Produkt gleich ausgesondert und an einen dafür vorgesehenen Platz ablegt.

Zum Einrichten der Soft-SPS 210 und dem Erstellen eines Steuerungsprogramms zur Steuerung des Roboters 500 sowie des AOI-Systems unter Verwendung der Kamera 400 ist auch im in Figur 4 dargestellten System ein Automatisierungs-Engineerings-Systems 600 vorgesehen, welches dem Automatisierungs-Engineerings-Systems 600, wie es im Zusammenhang mit Figur 1 bereits erläutert wurde, entspricht. Das Automatisierungs-Engineeringsystem 600 gemäß Figur 4 ist wiederum über eine OPC-UA-Kommunikationsverbindung 602 und die OPC-UA-App 216 mit der Soft-SPS 210 verbunden.

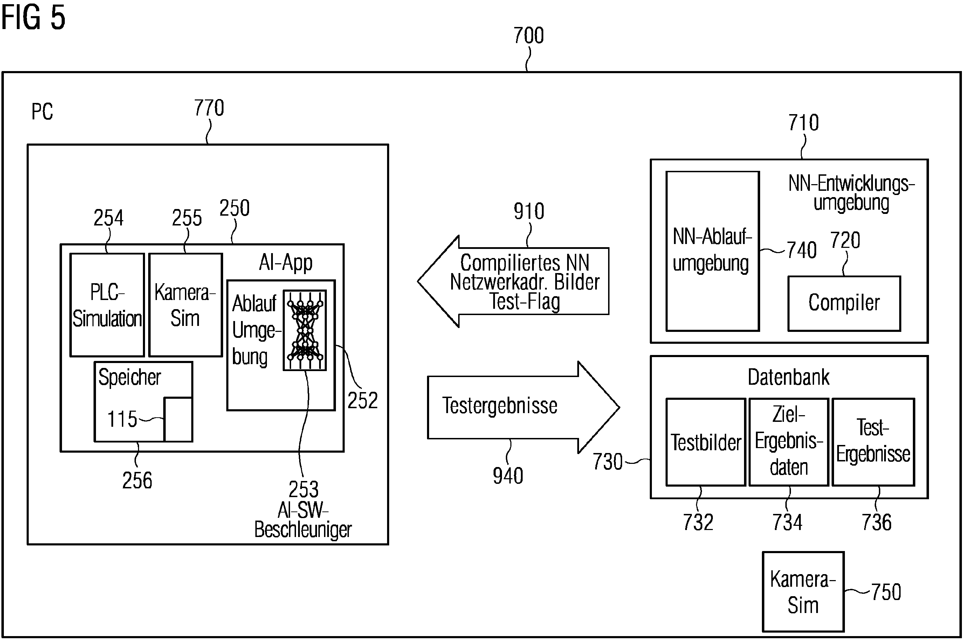

Figur 5 wiederum der PC 700 mit der NN-Entwicklungsumgebung 710 sowie der Datenbank 730 dargestellt, die er bereits im Zusammenhang mit den Figuren 2 und 3 näher erläutert wurde. Gleiche Bezugszeichen entsprechenden auch hier den gleichen Komponenten.

Figur 5 stellt ein Ausführungsbeispiel für einen Test einer in der NN-Entwicklungsumgebung 710 erstellten NN-Applikation 115 mit der AI-App 250 dar. Dabei entspricht der grundsätzliche Ablauf des Tests demjenigen, wie er bereits im Zusammenhang mit den Figuren 1-3 dargestellt und erläutert wurde. Im Folgenden wird daher im Wesentlichen nur auf Unterschiede im Ablauf eingegangen, die sich auf Unterschiede der in Figur 2 und 3 dargestellten Abläufe mit dem in Figur 5 dargestellten Ablauf beziehen.

Im in Figur 5 dargestellten Ausführungsbeispiel wurde die AI-App 250 in einer Container-Umgebung 770 im PC 700 installiert. Zur Containerrealisierung der AI-App 250 kann beispielsweise die Kubernetes- und/oder Docker-Technologie verwendet werden, die u.a. auch als Open Source verfügbar ist.

Dabei wurde die NN-Applikation 115 mit dem Compiler 720 der NN-Entwicklungsumgebung 710 für einen optimalen Ablauf mit dem AI-Software-Beschleuniger 253 der AI-App 250 angepasst.

Zum Testen der kompilierten NN-Applikation 115 wird diese in einem ersten Schritt 910, der in Figur 5 als Pfeil 910 dargestellt ist, zusammen mit einer Datei-Information für die Testbilder 732 sowie dem Test-Flag zur AI-App 250 übertragen und dort in deren Nutzerdaten-Speicher 256 gespeichert.

Im Rahmen eines Neustarts der AI-App 250 im Container 770 erfolgt eine Abfrage des Test-Flags. Nachdem das Test-Flag erkannt wurde, geht die AI-App 250 in den bereits im Zusammenhang mit den Figuren 1-3 sowie der vorliegenden Beschreibung erläuterten Test-Modus. Nach Erkennen der Datei-Information für die Testbilder 732 werden von der AI-App 250 die Testbilder 732 aus der Daten Bank 730 geladen und im Rahmen des Ablaufs des kompilierten neuronalen Netzes 115 in der Ablaufumgebung 252 der AI-App 250 vom kompilierten neuronalen Netz verarbeitet. Die dabei erhaltenen Testergebnisse 736 werden dann im Nutzerdatenspeicher 256 gespeichert.

Diese Testergebnisse 736 werden dann in einem nachfolgenden Schritt 940, der in Figur 5 ebenfalls durch einen Pfeil symbolisiert ist, in die Datenbank 730 übertragen und dort gespeichert. Nachfolgend erfolgt dann durch die NN-Entwicklungsumgebung 710 ein Vergleich der Soll- oder Ziel-Testergebnisse 734 mit den Testergebnissen 736 des kompilierten neuronalen Netzes 115 und ggf. eine Ausgabe entsprechender Vergleichsergebnisse an einen Nutzer.

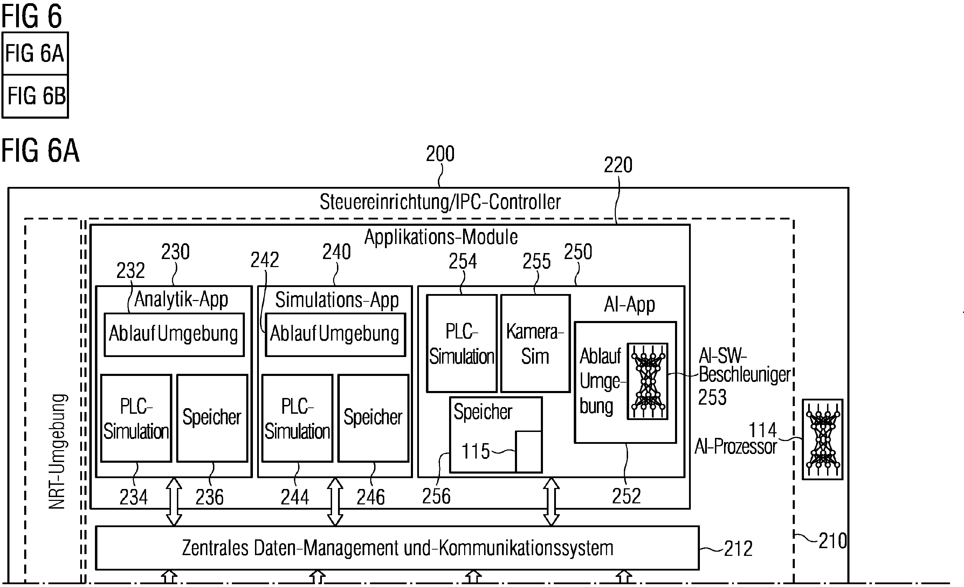

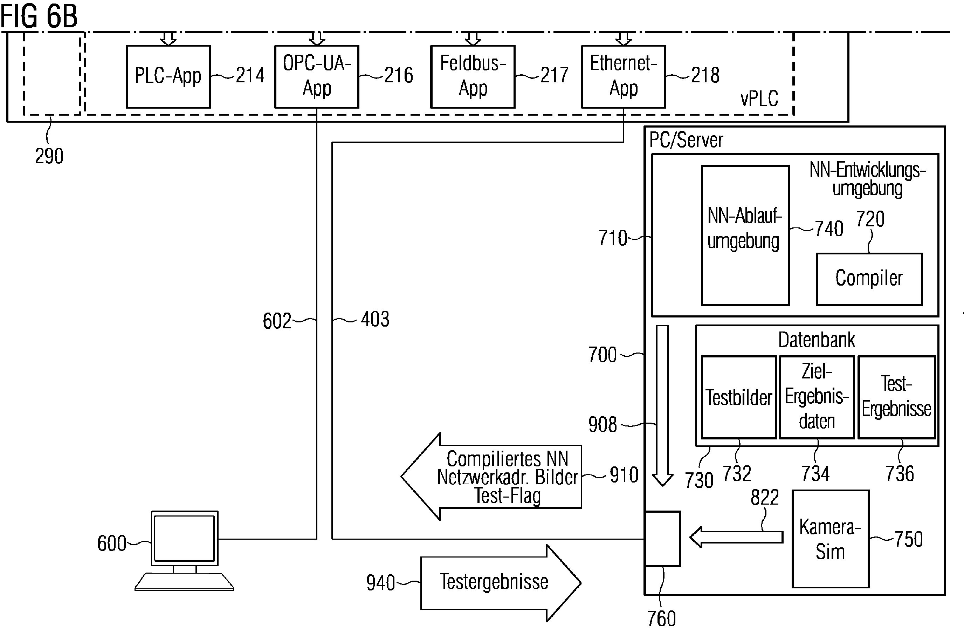

In Figur 6 ist ein weiteres Ausführungsbeispiel für ein Testen des kompilierten neuronalen Netzes 115 in der AI-App 250 dargestellt. Dabei ist der Compiler 720 der NN-Entwicklungsumgebung 710 derart eingerichtet, dass das neuronale Netz 115 zum Ablauf unter Verwendung des als Hardware ausgebildeten AI-Prozessors 114 des Industrie-PCs 200 angepasst ist.

Die AI-App 250 ist dabei in der Soft-SPS 210 in der in Figur 4 bereits dargestellten und erläuterten Art und Weise installiert. Allerdings ist bei dem in Figur 6 dargestellten Ausführungsbeispiel zum Testen des kompilierten neuronalen Netzes 115 in der AI-App 250 vorgesehen, dass die PLC-App 214 der Soft-SPS 210 noch kein Steuerprogramm umfasst und/oder die Soft-SPS 210 noch nicht, oder noch nicht vollständig, zum Steuern des Roboters 500 und/oder des AOI-Systems mit der Kamera 400 eingerichtet ist bzw. die genannten Systeme noch nicht steuert.

Der Figur 6 dargestellte Testablauf zum Testen der mit dem Compiler 720 der NN-Entwicklungsumgebung 710 kompilierten neuronalen-Netz-Applikation 115 beginnt mit einer Übertragung des kompilierten neuronalen Netzes 115 in einem ersten Schritt 908, der in Figur 6 als Pfeil dargestellt ist, zur Ethernet-Schnittstelle 760 des PCs 700. Gleichzeitig wird auch die Adressinformation für die Testbilder 732 sowie das Testen-Flag an Ethernet-Schnittstelle im 160 übertragen. Diese Informationen werden dann in einem nächsten Arbeitsschritt 910, in Figur 6 wiederum als Pfeil dargestellt, über eine Ethernet-Verbindung 403 und die Ethernet-App 218 der Soft-SPS 210 an die AI-App 250 der Soft-SPS 210 übertragen und in deren Nutzer Datenspeicher 256 gespeichert.

Im Rahmen eines Neustarts der AI-App 250 wird nun das Vorhandensein eines Test-Flags im Nutzerdaten-Speicher 256 der AI App 250 überprüft. Nach dem Erkennen des in Schritt 910 übertragenen Test-Flags wird die AI-App 250 in den Testmodus versetzt, worauf das Testen des kompilierten neuronalen Netzes 115 innerhalb der AI-App 250 gestartet wird. Dabei entspricht der generelle Ablauf eines solchen Tests dem im Zusammenhang mit Figur 3 dargestellten Ablauf.

Hierbei wird von der PLC-Simulation 254 ein Start einer Überprüfung eines Testbilds 732 getriggert. Die Kamerasimulation 255 übernimmt nun die Organisation des Testbilds 732, in dem sie anhand der Adress-Information für die Testbilder 732 vom PC 700 ein oder mehrere Testbilder 732 herunterlädt und dem in der Ablaufumgebung 252 der AI-App 250 ablaufenden kompilierten neuronalen Netz 115 als Test-Eingangsdaten zur Verfügung stellt. Dabei wird die Zurverfügungstellung der ein oder mehreren Testbilder im PC 700 ebenfalls durch eine Kamerasimulation 750 realisiert, welche dann die ein oder mehreren Testbilder 732 aus der Datenbank 730 abruft und über eine Ethernet-Schnittstelle 760 an die AI-App 250 überträgt. Die dann durch die Verarbeitung der ein oder mehreren Testbilder 732 vom kompilierten neuronalen Netz 115 erzeugten dem ein oder mehreren Testergebnisse 736 werden dann im Nutzerdatenspeicher 256 gespeichert. Nach dem Ende des Tests werden in einem weiteren Verfahrensschritt 940, in Figur 6 ebenfalls wieder als Pfeil dargestellt, diese zum PC 700 in die Datenbank 730 übertragen und dort als Testergebnisse 736 abgespeichert.

Nachfolgend wird in der NN-Entwicklungsumgebung 710 des PCs 700 ein Vergleich der Testergebnisse 736 mit den Soll- oder Ziel-Ergebnissen 734 durchgeführt und das Ergebnis dieses Vergleichs dann einem Nutzer ausgegeben.

Auf die insbesondere in Bezug auf die Figuren 2, 3, 5 und 6 dargestellte Weise kann die NN-Applikation 115, beispielsweise in einer speziell für die Hard- und/oder Software der AI-App 250 oder des AI-Moduls 110 angepassten kompilierten Version, getestet werden. Wie im Rahmen der genannten Ausführungen erläutert, kann das Testen auf dem AI-Modul 110 bzw. der AI-App 250 dabei in unmittelbarer Zusammenwirkung der NN-Entwicklungsumgebung 710 bzw. des PCs 700, auf welcher die NN-Entwicklungsumgebung im 710 läuft, erfolgen. Insbesondere kann ein Testen des neuronalen Netzes 115 bzw. des kompilierten neuronalen Netzes 115 ablaufen, ohne dass beispielsweise ein Zentralmodul 102 der SPS 100 bzw. die PLC-App 214 des IPCs 200 benötigt werden.

Insbesondere wurde dargestellt, wie ein Testen des neuronalen Netzes 115 bzw. des kompilierten neuronalen Netzes 115 mit dem AI-Modul 110 bzw. der AI-App 250 erfolgen kann, ohne dass diese mit der SPS 100 bzw. dem IPC 200 verbunden sind.

Dadurch, dass das Testen des neuronalen Netzes 115, bzw. des kompilierten neuronalen Netzes 115, unmittelbar im Zusammenwirken der NN-Entwicklungsumgebung 710 mit dem AI-Modul 110 bzw. der AI-App 250 erfolgt, ist es nicht notwendig, dass zum Testen das Automatisierungs-Engineerings-Systems 600 herangezogen oder involviert werden muss. Dies ist insbesondere vorteilhaft, da die Entwicklung des neuronalen Netzes 115 beispielsweise von Spezialisten für künstliche Intelligenzverfahren vorgenommen werden kann, der dann auch zum Testen des neuronalen Netzes 115 auf dem AI-Modul 110, bzw. mit der AI-App 250, keine eigenen Kenntnisse im Automatisierungs-Engineering haben muss. Dies vereinfacht ein Testen einer Nutzerapplikation für ein frei programmierbares Applikationsmodul für eine Steuereinrichtung.

Die im Rahmen der Figuren 1-6 erläuterten Verfahren zum Testen eines neuronalen Netzes lassen sich entsprechend auch für das Testen eines Simulationsprogramms in der Simulation-Applikation 240 oder das Testen eines Analyseprogramms in der Analytik-Applikation 230 übertragen. Als Testdaten beim Testen der Simulation-App 240 können dann beispielsweise spezielle Startbedingungen für ein zu simulierendes System verwendet werden. Zum Testen der Analytik-Applikation 230 können beispielsweise entsprechende Test-Daten verwendet werden.

## Patentansprüche

1. Applikationsmodul (110, 230, 240, 250) für eine Steuereinrichtung (100, 200),
wobei das Applikationsmodul (110, 230, 240, 250) zur Kommunikation und zum Zusammenwirken mit weiteren Komponenten der Steuereinrichtung (100, 200) im Rahmen einer Steuerung einer Maschine (400, 500) oder Anlage ausgebildet und eingerichtet ist,
wobei das Applikationsmodul (110, 230, 240, 250) zum Erzeugen einer Zusatzfunktionalität für die Steuereinrichtung (100, 200) vermittels Verwendung einer Nutzerapplikation (115) ausgebildet und eingerichtet ist,
wobei das Applikationsmodul (110, 230, 240, 250) zur Ausführung eines Betriebsmodus ausgebildet und eingerichtet ist, wobei in dem Betriebsmodus die Zusatzfunktionalität für die Steuereinrichtung (100, 200) unter Verwendung der Nutzerapplikation (115) erzeugt wird,
**dadurch gekennzeichnet, dass** das Applikationsmodul (110, 230, 240, 250) zur Ausführung eines Testmodus ausgebildet und eingerichtet ist, wobei der Testmodus zum Testen der Nutzerapplikation (115) ausgebildet und eingerichtet ist.

2. Applikationsmodul gemäß Anspruch 1,
**dadurch gekennzeichnet,**
**dass** ein Automatisierungs-Engineeringsystem (600) zum Einrichten der Steuereinrichtung (100, 200) sowie ein Applikations-Engineeringsystem (700, 710) zum Erstellen der Nutzerapplikation (115) vorgesehen sind,
und wobei das Applikationsmodul (110, 230, 240, 250) derart ausgebildet und eingerichtet ist, dass ein Testen der Nutzerapplikation (115) vermittels eines Zusammenwirkens des Applikationsmoduls (110, 230, 240, 250) mit dem Applikations-Engineeringsystem (700, 710) erfolgt oder durchführbar ist.

3. Applikationsmodul für eine Steuereinrichtung (100, 200),
wobei das Applikationsmodul (110, 230, 240, 250) zur Kommunikation und zum Zusammenwirken mit weiteren Komponenten (102, 104, 114, 214, 216, 217, 218, 230, 240) der Steuereinrichtung (100, 200) im Rahmen einer Steuerung einer Maschine (400, 500) oder Anlage ausgebildet und eingerichtet ist,
wobei das Applikationsmodul (110, 230, 240, 250) zum Erzeugen einer Zusatzfunktionalität für die Steuereinrichtung (100, 200) vermittels Verwendung einer Nutzerapplikation (115) ausgebildet und eingerichtet ist,
wobei ein Automatisierungs-Engineeringsystem (600) zum Einrichten der Steuereinrichtung (100, 200) sowie ein Applikations-Engineeringsystem (700, 710) zum Erstellen der Nutzerapplikation (115) vorgesehen sind,
wobei das Applikationsmodul (110, 230, 240, 250) derart ausgebildet und eingerichtet ist, dass ein Testen der Nutzerapplikation (115) vermittels eines Zusammenwirkens des Applikationsmoduls (110, 230, 240, 250) mit dem Applikations-Engineeringsystem (700, 710) erfolgt oder durchführbar ist.

4. Applikationsmodul gemäß Anspruch 3,
**dadurch gekennzeichnet,**
**dass** das Applikationsmodul (110, 230, 240, 250) zur Ausführung eines Betriebsmodus ausgebildet und eingerichtet ist, wobei in dem Betriebsmodus die Zusatzfunktionalität für die Steuereinrichtung (100, 200) unter Verwendung der Nutzerapplikation (115) erzeugt wird,
und **dass** das Applikationsmodul (110, 230, 240, 250) zur Ausführung eines Testmodus ausgebildet und eingerichtet ist, wobei der Testmodus zum Testen der Nutzerapplikation (115) ausgebildet und eingerichtet ist.

5. Applikationsmodul gemäß einem der vorstehenden Ansprüche,
**dadurch gekennzeichnet,**
**dass** das Applikationsmodul (110, 230, 240, 250) eine Steuerungseinrichtungs-Simulationsapplikation (116, 234, 244, 254) zur Simulation einer Steuerungsfunktionalität der Steuerungseinrichtung (100, 200) umfasst.

6. Applikationsmodul für eine Steuereinrichtung (100, 200), wobei das Applikationsmodul (110, 230, 240, 250) zur Kommunikation und zum Zusammenwirken mit weiteren Komponenten (102, 104, 114, 214, 216, 217, 218, 230, 240) der Steuereinrichtung (100, 200) im Rahmen einer Steuerung einer Maschine (400, 500) oder Anlage ausgebildet und eingerichtet ist,
wobei das Applikationsmodul (110, 230, 240, 250) zum Erzeugen einer Zusatzfunktionalität für die Steuereinrichtung (100, 200) vermittels Verwendung einer Nutzerapplikation (115) ausgebildet und eingerichtet ist,
**dadurch gekennzeichnet, dass** das Applikationsmodul (110, 230, 240, 250) eine Steuerungseinrichtungs-Simulationsapplikation (116, 234, 244, 254) zur Simulation einer Steuerungsfunktionalität der Steuerungseinrichtung (100, 200) umfasst.

7. Applikationsmodul gemäß Anspruch 6,
**dadurch gekennzeichnet,**
**dass** ein Automatisierungs-Engineeringsystem (600) zum Einrichten der Steuereinrichtung sowie ein Applikations-Engineeringsystem (700, 710) zum Erstellen der Nutzerapplikation (115) vorgesehen sind,
und wobei das Applikationsmodul (110, 230, 240, 250) derart ausgebildet und eingerichtet ist, dass ein Testen der Nutzerapplikation (115) vermittels eines Zusammenwirkens des Applikationsmoduls (110, 230, 240, 250) mit dem Applikations-Engineeringsystem (700, 710) erfolgt oder durchführbar ist.

8. Applikationsmodul gemäß Anspruch 6 oder 7,
**dadurch gekennzeichnet,**
**dass** das Applikationsmodul (110, 230, 240, 250) zur Ausführung eines Betriebsmodus ausgebildet und eingerichtet ist, wobei in dem Betriebsmodus die Zusatzfunktionalität für die Steuereinrichtung (100, 200) unter Verwendung der Nutzerapplikation (115) erzeugt wird,
und **dass** das Applikationsmodul (110, 230, 240, 250) zur Ausführung eines Testmodus ausgebildet und eingerichtet ist, wobei der Testmodus zum Testen der Nutzerapplikation (115) ausgebildet und eingerichtet ist.

9. Applikationsmodul gemäß einem der vorstehenden Ansprüche,
**dadurch gekennzeichnet,**
**dass** eine Test-Kennung vorgesehen ist, wobei das Applikationsmodul (110, 230, 240, 250) weiterhin zum Abfragen und/oder Erkennen der Test-Kennung sowie zum Ausführen des Test-Modus nach einer Erkennung der Test-Kennung, und/oder zum Testen der Nutzerapplikation (115) nach einer Erkennung der Test-Kennung, ausgebildet und eingerichtet ist.

10. Applikationsmodul gemäß einem der vorstehenden Ansprüche,
**dadurch gekennzeichnet,**
**dass** das Applikationsmodul (110, 230, 240, 250) eine Test-Speichereinrichtung (120, 236, 246, 256) umfasst oder mit einer Test-Speichereinrichtung (120, 236, 246, 256) verbunden ist, und dass die Test-Speichereinrichtung (120, 236, 246, 256) ohne Einbeziehung der Steuereinrichtung (100, 200) und/oder eines Automatisierungs-Engineeringsystems (600) gemäß einem der Ansprüche 2, 3 oder 7 beschreibbar ist.

11. Applikationsmodul gemäß Anspruch 10,
**dadurch gekennzeichnet,**
**dass** die Test-Speichereinrichtung (120, 236, 246, 256) lösbar mit dem Applikationsmodul (110, 230, 240, 250) verbunden ist.

12. Applikationsmodul gemäß Anspruch 10 oder 11,
**dadurch gekennzeichnet,**
**dass** die Test-Speichereinrichtung (120, 236, 246, 256) über eine externe Kommunikationsschnittstelle (111) des Applikationsmoduls (110, 230, 240, 250) beschreibbar ist oder beschrieben wird.

13. Applikationsmodul gemäß einem der Ansprüche 10 bis 12,
**dadurch gekennzeichnet,**
**dass** auf der Test-Speichereinrichtung (120, 236, 246, 256) Test-Daten (732, 734) zum Testen der Nutzerapplikation (115) gespeichert sind,
insbesondere, dass die Test-Daten (732, 734) weiterhin Test-Eingangsdaten (732) zur Verwendung durch das Applikationsmodul (110, 230, 240, 250) und/oder Ziel-Ergebnisdaten (734), die ein vorgegebenes Ergebnis der Verarbeitung der Test-Eingangsdaten (732) durch das Applikationsmodul (110, 230, 240, 250) darstellen.

14. Applikationsmodul gemäß einem der Ansprüche 10 bis 13,
**dadurch gekennzeichnet,**
**dass** die Test-Speichereinrichtung (120, 236, 246, 256) die Nutzerapplikation (115) und/oder Applikations-Konfigurationsdaten zum Einrichten des Applikationsmoduls (110, 230, 240, 250) und/oder der Nutzerapplikation (115) umfasst.

15. Applikationsmodul gemäß Anspruch 9 sowie einem der Ansprüche 10 bis 14,
**dadurch gekennzeichnet,**
**dass** die Test-Speichereinrichtung (120, 236, 246, 256) die Test-Kennung umfasst.

16. Applikationsmodul gemäß einem der Ansprüche 10 bis 15, **dadurch gekennzeichnet,**
**dass** die Test-Speichereinrichtung (120, 236, 246, 256) eine ID-Information bezüglich einer externen Speichereinrichtung (700, 730) umfasst, wobei das Applikationsmodul (110, 230, 240, 250) zum Erkennen von Daten auf der externen Speichereinrichtung (700, 730) und/oder zum Anfordern und/oder Laden von Daten von der externen Speichereinrichtung (700, 730) ausgebildet und eingerichtet ist,
insbesondere zum Erkennen, Anfordern und/oder Laden von Test-Daten (732, 734) zum Testen der Nutzerapplikation (115), von Applikations-Konfigurationsdaten zum Einrichten des Applikationsmoduls (110, 230, 240, 250), Applikations-Konfigurationsdaten zum Einrichten der Nutzerapplikation (115) und/oder der Test-Kennung gemäß Anspruch 9 auf bzw. von der externen Speichereinrichtung (700, 730) ausgebildet und eingerichtet ist.

17. Verfahren zum Testen einer Nutzerapplikation (115) mit einem Applikationsmodul (110, 230, 240, 250) gemäß einem der Ansprüche 1 bis 16 für eine Steuereinrichtung,
wobei das Verfahren die nachfolgenden Verfahrensschritte umfasst:
Laden von Test-Eingangsdaten (732) zum Testen der Nutzerapplikation (115),
Laden von Ziel-Ergebnisdaten (734), die ein geplantes Ergebnis der Verarbeitung der Test-Eingangsdaten (732) durch die Nutzerapplikation (115) darstellen,
Testen der der Nutzerapplikation (115) unter Verwendung der Test-Eingangsdaten (732) und der Ziel-Ergebnisdaten (734), **dadurch gekennzeichnet,**
**dass** das Applikationsmodul (110, 230, 240, 250) gemäß einem der Ansprüche 1 bis 16 ausgebildet und eingerichtet ist und beim Testen der Nutzerapplikation (115) im Test-Modus befindlich ist,
und/oder dass das Applikationsmodul (110, 230, 240, 250) gemäß einem der Ansprüche 2 bis 16 ausgebildet und eingerichtet ist und das Laden der Test-Eingangsdaten (732) und/oder das Laden der Ziel-Ergebnisdaten (734) und/oder das Testen der Nutzerapplikation (115) ohne Einbeziehung der Steuereinrichtung (100, 200) und/oder des Automatisierungs-Engineeringsystems (600) erfolgt,
und/oder dass das Applikationsmodul (110, 230, 240, 250) gemäß einem der Ansprüche 6 bis 16 ausgebildet und eingerichtet ist und das Applikationsmodul (110, 230, 240, 250) eine Steuerungseinrichtungs-Simulationsapplikation (116, 234, 244, 254) zur Simulation einer Steuerungsfunktionalität der Steuerungseinrichtung (110, 230, 240, 250) umfasst, wobei das Testen der Nutzerapplikation (115) unter Mitwirkung der Steuerungseinrichtungs-Simulationsapplikation (116, 234, 244, 254) erfolgt.

18. Verfahren zum Beschreiben einer Test-Speichereinrichtung (120, 236, 246, 256) für ein Applikationsmodul (110, 230, 240, 250) gemäß einem der Ansprüche 10 bis 16, durch ein Applikations-Engineeringsystem (700, 710) gemäß einem der Ansprüche 2 bis 16,
umfassen die Verfahrensschritte:
Verarbeitung von Test-Eingangsdaten (732) vermittels der Nutzerapplikation (115) und Speicherung von dabei Ermittelten Ziel-Ergebnisdaten (734),
Beschreiben der Test-Speichereinrichtung (120, 236, 246, 256) mit den Test-Eingangsdaten (732) und/oder den Ziel-Ergebnisdaten (734) durch das Applikations-Engineeringsystem (700, 710).

19. Verfahren zum Beschreiben einer Test-Speichereinrichtung (120, 236, 246, 256) für ein Applikationsmodul (110, 230, 240, 250) gemäß einem der Ansprüche 10 bis 16, durch ein Applikations-Engineeringsystem (700, 710) gemäß einem der Ansprüche 2 bis 16,
umfassen die Verfahrensschritte:
Verarbeitung von Test-Eingangsdaten (732) vermittels der Nutzerapplikation (115) und Speicherung von dabei Ermittelten Ziel-Ergebnisdaten (734),
Speichern der Test-Eingangsdaten (732) und/oder der Ziel-Ergebnisdaten (734) in einer vermittels einer ID-Information adressierbaren Speichereinrichtung (700, 730),
Beschreiben der Test-Speichereinrichtung (120, 236, 246, 256) mit der ID-Information durch das Applikations-Engineeringsystem (700, 710).

20. Verfahren gemäß Anspruch 18 oder 19,
**dadurch gekennzeichnet,**
**dass** weiterhin eine Test-Kennung gemäß einem der Ansprüche 9 bis 16 in die Test-Speichereinrichtung (120, 236, 246, 256) geschrieben wird.

21. Verfahren gemäß einem der Ansprüche 18 bis 20,
**dadurch gekennzeichnet,**
**dass** weiterhin die Nutzerapplikation (115) in die Test-Speichereinrichtung geschrieben wird (120, 236, 246, 256).
